# EUROPEAN PATENT APPLICATION

(11) **EP 4 576 905 A1**
(43) Date of publication of application: **25.06.2025**
(21) Application number: 23862252.6
(22) Date of filing: 31.08.2023
(51) Int. Cl.: H04W 72/11

(54) **METHOD AND APPARATUS USED IN NODE FOR WIRELESS COMMUNICATION**

(30) Priority: 07.09.2022 CN 202211099311; 09.09.2022 CN 202211105501
(71) Applicant: Shanghai Tuiluo Communication Technology Partnership (Limited Partnership), Shanghai 201203 (CN)
(72) Inventor: HU, Yang, Shanghai 201206 (CN); ZHANG, Xiaobo, Shanghai 201206 (CN)
(74) Representative: Zhang, Fan
(86) International application number: PCT/CN2023/115992
(87) International publication number: WO 2024/051558

(57) **Abstract**

The present application discloses a method and apparatus used in a node for wireless communication. A first receiver receives first information, the first information being used for indicating whether HARQ-ACK information is provided for a first RNTI, and the first RNTI being configurable; and the first receiver receives target DCI, wherein the target DCI comprises a first domain; the value of the first domain included in the target DCI denotes the total number of first-type {serving cell and PDCCH monitoring occasion} pairs up to the current PDCCH monitoring occasion; in one of the first-type {serving cell and PDCCH monitoring occasion} pairs, first-type PDSCH reception or HARQ-ACK information not for PDSCH reception is present, the first-type PDSCH reception or the HARQ-ACK information not for PDSCH reception is associated with first-type DCI, and the first-type DCI uses the first RNTI; and the first-type PDSCH reception is related to the first information.

## Description

### TECHNICAL FIELD

The present application relates to transmission methods and devices in wireless communication systems, and in particular to a method and device for radio signal transmission in a wireless communication system supporting cellular networks.

### BACKGROUND

For Multicast services supported by 5G NR, the 3GPP introduced a configuration that HARQ-ACK information is either provided or not provided for PDSCH reception; after the introduction of the above configuration, how to define the DAI field in a multicast DCI format is a key issue to be considered.

### SUMMARY

The present application discloses a solution to the above problem. It should be noted that the above description takes multicast as an example; the present application is equally applicable to other scenarios, such as unicast, groupcast, broadcast, etc., and achieves similar technical results. Additionally, the adoption of a unified solution for various scenarios, including but not limited to multicast, unicast, groupcast and broadcast, contributes to the reduction of hardcore complexity and costs or enhanced performance. It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:
receiving first information, the first information being used to indicate whether HARQ-ACK information is to be provided for a first RNTI, the first RNTI being configurable; and receiving a target DCI;
herein, the target DCI includes a first field; for the target DCI, a value of the first field being included denotes a total number of first-type {serving cell, PDCCH monitoring occasion}-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information.

In one embodiment, an advantage of the above method includes: reducing the HARQ-ACK feedback overhead.

In one embodiment, an advantage of the above method includes: increasing the probability that both communicating parties understand the HARQ-ACK feedback in agreement.

In one embodiment, an advantage of the above method includes: improving the transmission performance of uplink control signaling.

In one embodiment, an advantage of the above method includes: improving resource utilization.

In one embodiment, an advantage of the above method includes: ensuring good compatibility.

In one embodiment, an advantage of the above method includes: requiring only little modification to existing 3GPP standards.

According to one aspect of the present application, the above method is characterized in that,
the first RNTI is a G-RNTI or a G-CS-RNTI.

According to one aspect of the present application, the above method is characterized in that,
when the first information indicates that whether HARQ-ACK information is to be provided is indicated by a DCI, the first-type PDSCH reception means: a PDSCH reception associated to the first-type DCI other than the PDSCH reception scheduled by the DCI that indicates non-provision of the HARQ-ACK information.

According to one aspect of the present application, the above method is characterized in that,
when the first information indicates provision of HARQ-ACK information, the first-type PDSCH reception means: a PDSCH reception being scheduled by the first-type DCI.

According to one aspect of the present application, the above method is characterized in that,
the value of the first field in the target DCI is updated from PDCCH monitoring occasion to PDCCH monitoring occasion.

According to one aspect of the present application, the above method is characterized in comprising:
transmitting a first PUCCH, the first PUCCH carrying a first HARQ-ACK bit block;
herein, the first HARQ-ACK bit block comprises HARQ-ACK bits for transport blocks (TBs) in a PDSCH scheduled by the target DCI.

According to one aspect of the present application, the above method is characterized in that,
the first HARQ-ACK bit block depends on the value of the first field in the target DCI.

According to one aspect of the present application, the above method is characterized in that,
the target DCI is the first-type DCI.

According to one aspect of the present application, the above method is characterized in that,
the first field is a total DAI.

The present application provides a method in a second node for wireless communications, comprising:
transmitting first information, the first information being used to indicate whether HARQ-ACK information is to be provided for a first RNTI, the first RNTI being configurable; and transmitting a target DCI;
herein, the target DCI includes a first field; for the target DCI, a value of the first field being included denotes a total number of first-type {serving cell, PDCCH monitoring occasion}-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information.

According to one aspect of the present application, the above method is characterized in that,
the first RNTI is a G-RNTI or a G-CS-RNTI.

According to one aspect of the present application, the above method is characterized in that,
when the first information indicates that whether HARQ-ACK information is to be provided is indicated by a DCI, the first-type PDSCH reception means: a PDSCH reception associated to the first-type DCI other than the PDSCH reception scheduled by the DCI that indicates non-provision of the HARQ-ACK information.

According to one aspect of the present application, the above method is characterized in that,
when the first information indicates provision of HARQ-ACK information, the first-type PDSCH reception means: a PDSCH reception being scheduled by the first-type DCI.

According to one aspect of the present application, the above method is characterized in that,
the value of the first field in the target DCI is updated from PDCCH monitoring occasion to PDCCH monitoring occasion.

According to one aspect of the present application, the above method is characterized in comprising:
receiving a first PUCCH, the first PUCCH carrying a first HARQ-ACK bit block;
herein, the first HARQ-ACK bit block comprises HARQ-ACK bits for transport blocks (TBs) in a PDSCH scheduled by the target DCI.

According to one aspect of the present application, the above method is characterized in that,
the first HARQ-ACK bit block depends on the value of the first field in the target DCI.

According to one aspect of the present application, the above method is characterized in that,
the target DCI is the first-type DCI.

According to one aspect of the present application, the above method is characterized in that,
the first field is a total DAI.

The present application provides a first node for wireless communications, comprising:
a first receiver, receiving first information, the first information being used to indicate whether HARQ-ACK information is to be provided for a first RNTI, the first RNTI being configurable; and receiving a target DCI;
herein, the target DCI includes a first field; for the target DCI, a value of the first field being included denotes a total number of first-type {serving cell, PDCCH monitoring occasion}-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information.

The present application provides a second node for wireless communications, comprising:
a second transmitter, transmitting first information, the first information being used to indicate whether HARQ-ACK information is to be provided for a first RNTI, the first RNTI being configurable; and transmitting a target DCI;
herein, the target DCI includes a first field; for the target DCI, a value of the first field being included denotes a total number of first-type {serving cell, PDCCH monitoring occasion}-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information.

The present application provides a method in a first node for wireless communications, comprising:
receiving target information, the target information being for a target RNTI and used to indicate whether HARQ-ACK information is to be provided, the target RNTI being configurable; and receiving a first signaling group;
herein, for any signaling in the first signaling group, a value of a target field being included denotes an accumulative number of characteristic {serving cell, time interval}-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

In one embodiment, an advantage of the above method includes: reducing the HARQ-ACK feedback overhead.

In one embodiment, an advantage of the above method includes: increasing the probability that both communicating parties understand the HARQ-ACK feedback in agreement.

In one embodiment, an advantage of the above method includes: improving the transmission performance of uplink control signaling.

In one embodiment, an advantage of the above method includes: improving resource utilization.

In one embodiment, an advantage of the above method includes: ensuring good compatibility.

In one embodiment, an advantage of the above method includes: requiring only little modification to existing 3GPP standards.

According to one aspect of the present application, the above method is characterized in that,
the target RNTI is a G-RNTI.

According to one aspect of the present application, the above method is characterized in that,
when the target information indicates that whether HARQ-ACK information is to be provided is indicated by a DCI format, a characteristic PDSCH reception is a PDSCH reception associated to the characteristic signaling group other than a PDSCH reception scheduled by a DCI format that indicates non-provision of the HARQ-ACK information.

According to one aspect of the present application, the above method is characterized in that,
when the target information indicates provision of HARQ-ACK information, a characteristic PDSCH reception is a PDSCH reception being associated to the characteristic signaling group.

According to one aspect of the present application, the above method is characterized in that,
the time interval is a PDCCH monitoring occasion; the first reference order comprises: firstly, in an ascending order of serving cell index and then in an ascending order of PDCCH monitoring occasion index.

According to one aspect of the present application, the above method is characterized in that,
the time interval is a PDCCH monitoring occasion; the first reference order comprises: firstly, in an increasing order of start time for PDSCH reception for a same {serving cell, time interval }-pair, and then, in an ascending order of serving cell index, and thirdly, in an ascending order of PDCCH monitoring occasion index.

According to one aspect of the present application, the above method is characterized in comprising:
transmitting a first PUCCH, the first PUCCH carrying a first HARQ-ACK bit block;
herein, the first HARQ-ACK bit block comprises HARQ-ACK bits for transport blocks (TBs) in a PDSCH scheduled by at least one signaling in the first signaling group.

According to one aspect of the present application, the above method is characterized in that,
the first HARQ-ACK bit block depends on the value of the target field in at least one signaling in the first signaling group.

According to one aspect of the present application, the above method is characterized in that,
the target field is a counter DAI.

The present application provides a method in a second node for wireless communications, comprising:
transmitting target information, the target information being for a target RNTI and used to indicate whether HARQ-ACK information is to be provided, the target RNTI being configurable; and transmitting a first signaling group;
herein, for any signaling in the first signaling group, a value of a target field being included denotes an accumulative number of characteristic {serving cell, time interval}-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

According to one aspect of the present application, the above method is characterized in that,
the target RNTI is a G-RNTI.

According to one aspect of the present application, the above method is characterized in that,
when the target information indicates that whether HARQ-ACK information is to be provided is indicated by a DCI format, a characteristic PDSCH reception is a PDSCH reception associated to the characteristic signaling group other than a PDSCH reception scheduled by a DCI format that indicates non-provision of the HARQ-ACK information.

According to one aspect of the present application, the above method is characterized in that,
when the target information indicates provision of HARQ-ACK information, a characteristic PDSCH reception is a PDSCH reception being associated to the characteristic signaling group.

According to one aspect of the present application, the above method is characterized in that,
the time interval is a PDCCH monitoring occasion; the first reference order comprises: firstly, in an ascending order of serving cell index and then in an ascending order of PDCCH monitoring occasion index.

According to one aspect of the present application, the above method is characterized in that,
the time interval is a PDCCH monitoring occasion; the first reference order comprises: firstly, in an increasing order of start time for PDSCH reception for a same {serving cell, time interval }-pair, and then, in an ascending order of serving cell index, and thirdly, in an ascending order of PDCCH monitoring occasion index.

According to one aspect of the present application, the above method is characterized in comprising:
receiving a first PUCCH, the first PUCCH carrying a first HARQ-ACK bit block;
herein, the first HARQ-ACK bit block comprises HARQ-ACK bits for transport blocks (TBs) in a PDSCH scheduled by at least one signaling in the first signaling group.

According to one aspect of the present application, the above method is characterized in that,
the first HARQ-ACK bit block depends on the value of the target field in at least one signaling in the first signaling group.

According to one aspect of the present application, the above method is characterized in that,
the target field is a counter DAI.

The present application provides a first node for wireless communications, comprising:
a first receiver, receiving target information, the target information being for a target RNTI and used to indicate whether HARQ-ACK information is to be provided, the target RNTI being configurable; and receiving a first signaling group;
herein, for any signaling in the first signaling group, a value of a target field being included denotes an accumulative number of characteristic {serving cell, time interval}-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

According to one aspect of the present application, the above node is characterized in that,
the target RNTI is a G-RNTI.

According to one aspect of the present application, the above node is characterized in that,
when the target information indicates that whether HARQ-ACK information is to be provided is indicated by a DCI format, a characteristic PDSCH reception is a PDSCH reception associated to the characteristic signaling group other than a PDSCH reception scheduled by a DCI format that indicates non-provision of the HARQ-ACK information.

According to one aspect of the present application, the above node is characterized in that,
when the target information indicates provision of HARQ-ACK information, a characteristic PDSCH reception is a PDSCH reception being associated to the characteristic signaling group.

According to one aspect of the present application, the above node is characterized in that,
the time interval is a PDCCH monitoring occasion; the first reference order comprises: firstly, in an ascending order of serving cell index and then in an ascending order of PDCCH monitoring occasion index.

According to one aspect of the present application, the above node is characterized in that,
the time interval is a PDCCH monitoring occasion; the first reference order comprises: firstly, in an increasing order of start time for PDSCH reception for a same {serving cell, time interval }-pair, and then, in an ascending order of serving cell index, and thirdly, in an ascending order of PDCCH monitoring occasion index.

According to one aspect of the present application, the above node is characterized in comprising:
a first transmitter, transmitting a first PUCCH, the first PUCCH carrying a first HARQ-ACK bit block;
herein, the first HARQ-ACK bit block comprises HARQ-ACK bits for transport blocks (TBs) in a PDSCH scheduled by at least one signaling in the first signaling group.

According to one aspect of the present application, the above node is characterized in that,
the first HARQ-ACK bit block depends on the value of the target field in at least one signaling in the first signaling group.

According to one aspect of the present application, the above node is characterized in that,
the target field is a counter DAI.

The present application provides a second node for wireless communications, comprising:
a second transmitter, transmitting target information, the target information being for a target RNTI and used to indicate whether HARQ-ACK information is to be provided, the target RNTI being configurable; and transmitting a first signaling group;
herein, for any signaling in the first signaling group, a value of a target field being included denotes an accumulative number of characteristic {serving cell, time interval}-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of processing of a first node according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first communication device and a second communication device according to one embodiment of the present application.
FIG. 5 illustrates a flowchart of signal transmission according to one embodiment of the present application.
FIG. 6 illustrates a schematic diagram explaining a first RNTI according to one embodiment of the present application.
FIG. 7 illustrates a schematic diagram explaining a total number of first-type {serving cell, PDCCH monitoring occasion }-pairs up to a current PDCCH monitoring occasion corresponding to a target DCI according to one embodiment of the present application.
FIG. 8 illustrates a schematic diagram of relations among a first PUCCH, a first HARQ-ACK bit block and a target DCI according to one embodiment of the present application.
FIG. 9 illustrates a schematic diagram of a relation between a first HARQ-ACK bit block and the value of a first field in a target DCI according to one embodiment of the present application.
FIG. 10 illustrates a structure block diagram of a processing device in a first node according to one embodiment of the present application.
FIG. 11 illustrates a structure block diagram of a processing device in a second node according to one embodiment of the present application.
FIG. 12 illustrates a flowchart of processing of a first node according to one embodiment of the present application.
FIG. 13 illustrates a flowchart of signal transmission according to one embodiment of the present application.
FIG. 14 illustrates a schematic diagram explaining a target RNTI according to one embodiment of the present application.
FIG. 15 illustrates a schematic diagram illustrating an accumulative number of characteristic {serving cell, time interval}-pairs up to a current serving cell and a current time interval according to a first reference order for one signaling in a first signaling group, according to one embodiment of the present application.
FIG. 16 illustrates a schematic diagram illustrating an accumulative number of characteristic {serving cell, time interval}-pairs up to a current serving cell and a current time interval according to a first reference order for one signaling in a first signaling group, according to one embodiment of the present application.
FIG. 17 illustrates a schematic diagram of relations among a first PUCCH, a first HARQ-ACK bit block and a first signaling group according to one embodiment of the present application.
FIG. 18 illustrates a schematic diagram of a relation between a first HARQ-ACK bit block and the value of the target field in at least one signaling in the first signaling group according to one embodiment of the present application.
FIG. 19 illustrates a structure block diagram of a processing device in a first node according to one embodiment of the present application.
FIG. 20 illustrates a structure block diagram of a processing device in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

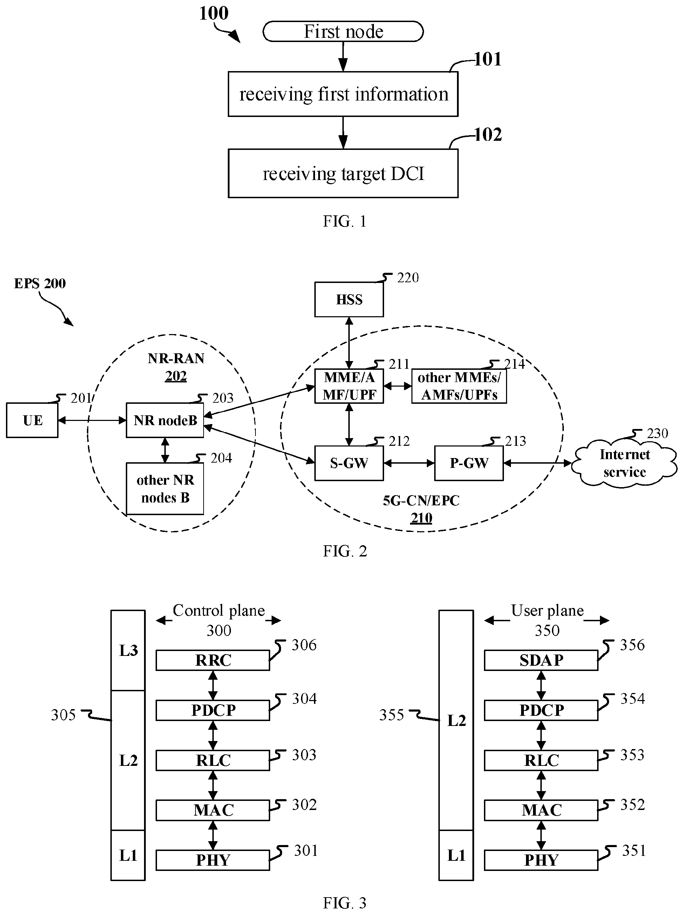

Embodiment 1 illustrates a flowchart of processing of a first node according to one embodiment of the present application, as shown in FIG. 1.

In Embodiment 1, the first node in the present application receives first information in step 101; and receives a target DCI in step 102.

In Embodiment 1, the first information is used to indicate whether HARQ-ACK information is to be provided for a first RNTI, the first RNTI being configurable; the target DCI includes a first field; for the target DCI, a value of the first field being included denotes a total number of first-type {serving cell, PDCCH monitoring occasion }-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information.

In one embodiment, the target DCI comprises a physical layer signaling.

In one embodiment, the target DCI comprises a Layer 1 (L1) signaling.

In one embodiment, the target DCI comprises a Layer 1 (L1) control signaling.

In one embodiment, the target DCI comprises one or more fields in a physical layer signaling.

In one embodiment, the target DCI is a signaling used to schedule a PDSCH reception.

In one embodiment, the target DCI is a first-type DCI mentioned above.

In one embodiment, a DCI mentioned in the present application is a Downlink Control Information (DCI) format.

In one embodiment, a DCI mentioned in the present application is a DCI signaling.

In one embodiment, a DCI mentioned in the present application is a multicast DCI format.

In one embodiment, the target DCI is a DCI format for multicasting.

In one embodiment, the target DCI comprises at least one field in a DCI format for multicasting.

In one embodiment, the target DCI is DCI format 4_0.

In one embodiment, the target DCI is DCI format 4_1.

In one embodiment, the target DCI is DCI format 4_2.

In one embodiment, the first field comprises only 1 bit.

In one embodiment, the first field comprises 2 bits.

In one embodiment, the first field comprises multiple bits.

In one embodiment, the first field is a Downlink assignment index (DAI) field.

In one embodiment, the first field is a total DAI field.

In one embodiment, the target DCI is detected in the current PDCCH (i.e., Physical downlink control channel) monitoring occasion to which it corresponds.

In one embodiment, one PDCCH in the current PDCCH monitoring occasion corresponding to the target DCI is used to receive the target DCI.

In one embodiment, the current PDCCH monitoring occasion is for the target DCI.

In one embodiment, the current PDCCH monitoring occasion corresponding to the target DCI is for a signal reception performed by the first node.

In one embodiment, the HARQ-ACK information not for PDSCH reception comprises HARQ-ACK information for a DCI that does not schedule PDSCH.

In one embodiment, the HARQ-ACK information not for PDSCH reception comprises HARQ-ACK information for a DCI that indicates Semi-persistent scheduling (SPS) Physical downlink shared channel (PDSCH) release.

In one embodiment, the HARQ-ACK information not for PDSCH reception comprises HARQ-ACK information for a DCI (i.e., Downlink Control Information) that indicates a Transmission Configuration Indicator (TCI) state update.

In one embodiment, the HARQ-ACK information not for PDSCH reception comprises HARQ-ACK information for a DCI that indicates dormancy of a secondary cell (Scell) and does not schedule PDSCH reception.

In one embodiment, the expression that there is a first-type PDSCH reception or HARQ-ACK information not for PDSCH reception comprises that a first-type PDSCH reception is present.

In one embodiment, the expression that there is a first-type PDSCH reception or HARQ-ACK information not for PDSCH reception comprises that HARQ-ACK information not for PDSCH reception is present.

In one embodiment, the expression that there is a first-type PDSCH reception or HARQ-ACK information not for PDSCH reception comprises that a first-type PDSCH reception or HARQ-ACK information not for PDSCH reception is present.

In one embodiment, the expression the first-type PDSCH reception or the HARQ-ACK information not for PDSCH reception being associated to first-type DCI comprises that the HARQ-ACK information not for PDSCH reception is associated to the first-type DCI.

In one embodiment, the expression the first-type PDSCH reception or the HARQ-ACK information not for PDSCH reception being associated to first-type DCI comprises that the first-type PDSCH reception is associated to the first-type DCI.

In one embodiment, the expression the first-type PDSCH reception or the HARQ-ACK information not for PDSCH reception being associated to first-type DCI comprises that one such first-type PDSCH reception is scheduled by one first-type DCI mentioned above.

In one embodiment, the expression the first-type PDSCH reception or the HARQ-ACK information not for PDSCH reception being associated to first-type DCI comprises that the HARQ-ACK information not for PDSCH reception comprises HARQ-ACK information for at least one first-type DCI mentioned above.

In one embodiment, the expression enabling HARQ-ACK information comprises: providing HARQ-ACK information.

In one embodiment, the expression disabling HARQ-ACK information comprises: not providing HARQ-ACK information.

In one embodiment, the expression enabling HARQ-ACK information comprises: providing HARQ-ACK information for PDSCH reception.

In one embodiment, the expression disabling HARQ-ACK information comprises: not providing HARQ-ACK information for PDSCH reception.

In one embodiment, the expression enabling HARQ-ACK information comprises: having HARQ-ACK information.

In one embodiment, the expression disabling HARQ-ACK information comprises: having no HARQ-ACK information.

In one embodiment, the expression enabling HARQ-ACK information comprises: having HARQ-ACK information for PDSCH reception.

In one embodiment, the expression disabling HARQ-ACK information comprises: having no HARQ-ACK information for PDSCH reception.

In one embodiment, the expression "enabling HARQ-ACK information" and the expression "providing HARQ-ACK information" in the present application are equivalent or interchangeable.

In one embodiment, the expression "disabling HARQ-ACK information" and the expression "not providing HARQ-ACK information" in the present application are equivalent or interchangeable.

In one embodiment, the expression providing HARQ-ACK information comprises: providing HARQ-ACK information for PDSCH reception.

In one embodiment, the expression not providing HARQ-ACK information comprises: not providing HARQ-ACK information for PDSCH reception.

In one embodiment, the expression providing HARQ-ACK information comprises: having HARQ-ACK information.

In one embodiment, the expression not providing HARQ-ACK information comprises: having no HARQ-ACK information.

In one embodiment, the expression providing HARQ-ACK information comprises: having HARQ-ACK information for PDSCH reception.

In one embodiment, the expression not providing HARQ-ACK information comprises: having no HARQ-ACK information for PDSCH reception.

In one embodiment, the expression providing HARQ-ACK information comprises: the first node shall provide HARQ-ACK information.

In one embodiment, the expression not providing HARQ-ACK information comprises: the first node shall not provide HARQ-ACK information.

In one embodiment, the expression the first information explicitly indicates whether HARQ-ACK information is provided for the first RNTI.

In one embodiment, the expression the first information implicitly indicates whether HARQ-ACK information is provided for the first RNTI.

In one embodiment, the expression the first information being used to indicate whether HARQ-ACK information is to be provided for a first RNTI comprises that for the first RNTI, the first information is used to indicate whether HARQ-ACK information is to be provided.

In one embodiment, the expression the first information being used to indicate whether HARQ-ACK information is to be provided for a first RNTI comprises that the first information is used to indicate: for the first RNTI, whether the first node is to provide HARQ-ACK information or not to provide the HARQ-ACK information, or determines that whether HARQ-ACK information is to be provided is indicated by a DCI.

In one embodiment, the expression the first information being used to indicate whether HARQ-ACK information is to be provided for a first RNTI comprises that the first information comprises configuration information for determining whether or not HARQ-ACK information is to be provided with respect to the first RNTI.

In one embodiment, the expression the first information being used to indicate whether HARQ-ACK information is to be provided for a first RNTI comprises that the first information is configured for the first RNTI, the first information being used to determine whether HARQ-ACK information is provided or not.

In one embodiment, the expression the first information being used to indicate whether HARQ-ACK information is to be provided for a first RNTI comprises that the first information is configured for the first RNTI, the first information being used to indicate whether or not HARQ-ACK information is provided.

In one embodiment, the first information and the first RNTI are configured in a same field that includes Group-Config in its name.

In one embodiment, the first information comprises a Radio Resource Control (RRC) signaling.

In one embodiment, the first information comprises at least one field in at least one Information Element (IE).

In one embodiment, the first information comprises an IE MAC-CellGroupConfig.

In one embodiment, the first information comprises harq-FeedbackEnablerMulticast-r17.

In one embodiment, the first information is harq-FeedbackEnablerMulticast-r17.

In one embodiment, the first information is harq-FeedbackEnablerMulticast.

In one embodiment, the first information includes harq-FeedbackEnablerMulticast in its name.

In one embodiment, the first information is Group-Config-r17.

In one embodiment, the first information is Group-Config.

In one embodiment, a name of the first information includes Group-Config.

In one embodiment, a PDSCH reception comprises one PDSCH.

In one embodiment, a DCI for SPS activation is not the first-type DCI.

In one embodiment, the first-type DCI is not used for SPS activation.

In one embodiment, the first-type DCI is used for scheduling a PDSCH reception.

In one embodiment, the first-type DCI is a multicast DCI format.

In one embodiment, the first-type DCI is a multicast DCI format having a CRC scrambled by the first RNTI.

In one embodiment, any said first-type {serving cell, PDCCH monitoring occasion}-pair is a {serving cell, PDCCH monitoring occasion }-pair.

In one embodiment, in any said first-type {serving cell, PDCCH monitoring occasion}-pair, there exists at least one first-type PDSCH reception or HARQ-ACK information not for PDSCH reception, the at least one first-type PDSCH reception or the HARQ-ACK information not for PDSCH reception being associated to at least one first-type DCI mentioned above.

In one embodiment, in any said first-type {serving cell, PDCCH monitoring occasion}-pair, there exists at least one first-type PDSCH reception, the at least one first-type PDSCH reception being associated to at least one first-type DCI mentioned above.

In one embodiment, when the first-type PDSCH reception is not present in a {serving cell, PDCCH monitoring occasion}-pair, this {serving cell, PDCCH monitoring occasion}-pair is not the first-type {serving cell, PDCCH monitoring occasion }-pair.

In one embodiment, when the first-type PDSCH reception and the HARQ-ACK information not for PDSCH reception being associated to the first-type DCI are not present in a {serving cell, PDCCH monitoring occasion}-pair, this {serving cell, PDCCH monitoring occasion }-pair is not the first-type {serving cell, PDCCH monitoring occasion }-pair.

In one embodiment, the first-type {serving cell, PDCCH monitoring occasion}-pairs are for a same slot used for transmitting a PUCCH.

In one embodiment, the first-type {serving cell, PDCCH monitoring occasion}-pairs are for a same PUCCH.

In one embodiment, the first-type {serving cell, PDCCH monitoring occasion}-pairs are for a same PUCCH used for transmitting the HARQ-ACK information.

In one embodiment, the PDCCH monitoring occasions mentioned in this application are all for a same slot that is used for transmitting the PUCCH.

In one embodiment, the PDCCH monitoring occasions mentioned in this application are all for a same PUCCH.

In one embodiment, the PDCCH monitoring occasions mentioned in this application are all for a same PUCCH used for transmitting the HARQ-ACK information.

In one embodiment, the PDCCH monitoring occasions mentioned in this application are all for a same PUCCH used for transmitting the HARQ-ACK information in a same slot.

In one embodiment, the presence of a PDSCH reception in a {serving cell, PDCCH monitoring occasion}-pair comprises that a serving cell corresponding to the {serving cell, PDCCH monitoring occasion}-pair is used for this PDSCH reception.

In one embodiment, the presence of a PDSCH reception in a {serving cell, PDCCH monitoring occasion}-pair comprises that this PDSCH reception is on a serving cell corresponding to the {serving cell, PDCCH monitoring occasion}-pair, and, a DCI scheduling this PDSCH reception is detected in a PDCCH monitoring occasion corresponding to the {serving cell, PDCCH monitoring occasion }-pair.

In one embodiment, the presence of HARQ-ACK information not for PDSCH reception in a {serving cell, PDCCH monitoring occasion}-pair comprises that a DCI having associated HARQ-ACK information and not scheduling a PDSCH is detected on a serving cell corresponding to the {serving cell, PDCCH monitoring occasion}-pair.

In one embodiment, the presence of HARQ-ACK information not for PDSCH reception in a {serving cell, PDCCH monitoring occasion}-pair comprises that a DCI having associated HARQ-ACK information and not scheduling a PDSCH is detected in a PDCCH monitoring occasion corresponding to the {serving cell, PDCCH monitoring occasion}-pair.

In one embodiment, when one first-type DCI is detected in one PDCCH monitoring occasion and the one first-type DCI schedules at least one first-type PDSCH reception on one serving cell, the one serving cell and the one PDCCH monitoring occasion together form one first-type {serving cell, PDCCH monitoring occasion}-pair, and, there exists the at least one first-type PDSCH reception in the one first-type {serving cell, PDCCH monitoring occasion}-pair.

In one embodiment, when one first-type DCI is detected in one PDCCH monitoring occasion on one serving cell and the one first-type DCI schedules at least one first-type PDSCH reception, the one serving cell and the one PDCCH monitoring occasion together form one first-type {serving cell, PDCCH monitoring occasion}-pair, and, there exists the at least one first-type PDSCH reception in the one first-type {serving cell, PDCCH monitoring occasion}-pair.

In one embodiment, when one first-type DCI is detected in one PDCCH monitoring occasion on one serving cell and the one first-type DCI has associated HARQ-ACK information and does not schedule PDSCH reception, the one serving cell and the one PDCCH monitoring occasion together form one first-type {serving cell, PDCCH monitoring occasion}-pair, and , there exists HARQ-ACK information not for PDSCH reception in the one first-type {serving cell, PDCCH monitoring occasion}-pair.

In one embodiment, when one first-type DCI is detected in one PDCCH monitoring occasion and the one first-type DCI has HARQ-ACK information for one serving cell and does not schedule PDSCH reception, the one serving cell and the one PDCCH monitoring occasion together form one first-type {serving cell, PDCCH monitoring occasion}-pair, and , there exists HARQ-ACK information not for PDSCH reception in the one first-type {serving cell, PDCCH monitoring occasion}-pair.

In one embodiment, any first-type DCI mentioned above indicates that HARQ-ACK information is transmitted in a PUCCH of the same slot.

In one embodiment, the first-type {serving cell, PDCCH monitoring occasion}-pair depends on the first information.

In one embodiment, whether a {serving cell, PDCCH monitoring occasion}-pair is the first-type {serving cell, PDCCH monitoring occasion }-pair depends on the first information.

In one embodiment, the first information is used to determine the first-type {serving cell, PDCCH monitoring occasion }-pair.

In one embodiment, the first-type {serving cell, PDCCH monitoring occasion}-pair is related to the first information.

In one embodiment, whether a {serving cell, PDCCH monitoring occasion}-pair is the first-type {serving cell, PDCCH monitoring occasion}-pair is related to the first information.

In one embodiment, the first-type PDSCH reception is dependent on the first information.

In one embodiment, the first information is used to determine the first-type PDSCH reception.

In one embodiment, one first-type PDSCH reception mentioned above is a PDSCH reception.

In one embodiment, one first-type PDSCH reception is a PDSCH reception for multicasting.

In one embodiment, the statement the first-type PDSCH reception being related to the first information comprises: when the first information indicates that whether HARQ-ACK information is to be provided is indicated by a DCI, the first-type PDSCH reception means: a PDSCH reception associated to the first-type DCI other than the PDSCH reception scheduled by the DCI that indicates non-provision of the HARQ-ACK information.

In one embodiment, the statement the first-type PDSCH reception being related to the first information comprises: when the first information indicates that whether HARQ-ACK information is to be provided is indicated by a DCI, the first-type PDSCH reception means: a PDSCH reception being scheduled by the first-type DCI other than the DCI that indicates non-provision of the HARQ-ACK information.

In one embodiment, the statement the first-type PDSCH reception being related to the first information comprises: when the first information indicates that whether HARQ-ACK information is to be provided is indicated by a DCI, the first-type PDSCH reception means: a PDSCH reception being scheduled by the first-type DCI other than the PDSCH reception scheduled by the DCI that indicates non-provision of the HARQ-ACK information.

In one embodiment, the statement the first-type PDSCH reception being related to the first information comprises: when the first information indicates that whether HARQ-ACK information is to be provided is indicated by a DCI, the first-type PDSCH reception means: a PDSCH reception being scheduled by the first-type DCI that indicates provision of the HARQ-ACK information.

In one embodiment, the statement the first-type PDSCH reception being related to the first information comprises: when the first information indicates that whether HARQ-ACK information is to be provided is indicated by a DCI, the first-type PDSCH reception means: a PDSCH reception being associated to the first-type DCI that indicates provision of the HARQ-ACK information.

In one embodiment, the statement the first-type PDSCH reception being related to the first information comprises: when the first information indicates that whether HARQ-ACK information is to be provided is indicated by a DCI, the first-type PDSCH reception comprises: a PDSCH reception associated to the first-type DCI other than the PDSCH reception scheduled by the DCI that indicates non-provision of the HARQ-ACK information.

In one embodiment, the statement the first-type PDSCH reception being related to the first information comprises: when the first information indicates that whether HARQ-ACK information is to be provided is indicated by a DCI, the first-type PDSCH reception comprises: a PDSCH reception being scheduled by the first-type DCI other than the DCI that indicates non-provision of the HARQ-ACK information.

In one embodiment, the statement the first-type PDSCH reception being related to the first information comprises: when the first information indicates that whether HARQ-ACK information is to be provided is indicated by a DCI, the first-type PDSCH reception comprises: a PDSCH reception being scheduled by the first-type DCI other than the PDSCH reception scheduled by the DCI that indicates non-provision of the HARQ-ACK information.

In one embodiment, the statement the first-type PDSCH reception being related to the first information comprises: when the first information indicates that whether HARQ-ACK information is to be provided is indicated by a DCI, the first-type PDSCH reception comprises: a PDSCH reception being scheduled by the first-type DCI that indicates provision of the HARQ-ACK information.

In one embodiment, the statement the first-type PDSCH reception being related to the first information comprises: when the first information indicates that whether HARQ-ACK information is to be provided is indicated by a DCI, the first-type PDSCH reception comprises: a PDSCH reception being associated to the first-type DCI that indicates provision of the HARQ-ACK information.

In one embodiment, the statement the first-type PDSCH reception being related to the first information comprises: when the first information indicates that whether HARQ-ACK information is to be provided is indicated by a DCI: a PDSCH reception scheduled by a first-type DCI mentioned above that indicates non-provision of the HARQ-ACK information is not the first-type PDSCH reception.

In one embodiment, the statement the first-type PDSCH reception being related to the first information comprises: when the first information indicates that whether HARQ-ACK information is to be provided is indicated by a DCI, the first-type PDSCH reception means: a PDSCH reception associated to the first-type DCI other than the PDSCH reception scheduled by the first-type DCI that indicates non-provision of the HARQ-ACK information.

In one embodiment, the statement the first-type PDSCH reception being related to the first information comprises: when the first information indicates that whether HARQ-ACK information is to be provided is indicated by a DCI, the first-type PDSCH reception means: a PDSCH reception being associated to the first-type DCI other than the first-type DCI that indicates non-provision of the HARQ-ACK information.

In one embodiment, the statement the first-type PDSCH reception being related to the first information comprises: when the first information indicates that whether HARQ-ACK information is to be provided is indicated by a DCI, the first-type PDSCH reception means: a PDSCH reception being associated to the first-type DCI other than the DCI that indicates non-provision of the HARQ-ACK information.

In one embodiment, the statement the first-type PDSCH reception being related to the first information comprises: when the first information indicates provision of HARQ-ACK information, the first-type PDSCH reception means: a PDSCH reception being scheduled by the first-type DCI.

In one embodiment, the statement the first-type PDSCH reception being related to the first information comprises: when the first information indicates provision of HARQ-ACK information, any PDSCH reception scheduled by the first-type DCI is the first-type PDSCH reception.

In one embodiment, the statement the first-type PDSCH reception being related to the first information comprises: when the first information indicates provision of HARQ-ACK information, the first-type PDSCH reception means: a PDSCH reception being associated to the first-type DCI.

In one embodiment, the statement the first-type PDSCH reception being related to the first information comprises: when the first information indicates provision of HARQ-ACK information, the first-type PDSCH reception means: a PDSCH reception being associated to any first-type DCI mentioned above.

In one embodiment, the statement the first-type PDSCH reception being related to the first information comprises: when the first information indicates provision of HARQ-ACK information, the first-type PDSCH reception comprises: a PDSCH reception being scheduled by the first-type DCI.

In one embodiment, when the first information indicates provision of HARQ-ACK information, any PDSCH reception associated to the first-type DCI is the first-type PDSCH reception.

In one embodiment, when the first information indicates that whether HARQ-ACK information is to be provided is indicated by a DCI, the first-type PDSCH reception means: a PDSCH reception associated to the first-type DCI other than the PDSCH reception scheduled by the DCI that indicates non-provision of the HARQ-ACK information.

In one embodiment, when the first information indicates that whether HARQ-ACK information is to be provided is indicated by a DCI, the first-type PDSCH reception comprises: a PDSCH reception associated to the first-type DCI other than the PDSCH reception scheduled by the DCI that indicates non-provision of the HARQ-ACK information.

In one embodiment, when the first information indicates that whether HARQ-ACK information is to be provided is indicated by a DCI, the first-type PDSCH reception means: a PDSCH reception being scheduled by the first-type DCI other than the DCI that indicates non-provision of the HARQ-ACK information.

In one embodiment, when the first information indicates that whether HARQ-ACK information is to be provided is indicated by a DCI, the first-type PDSCH reception means: a PDSCH reception being scheduled by the first-type DCI other than the PDSCH reception scheduled by the DCI that indicates non-provision of the HARQ-ACK information.

In one embodiment, when the first information indicates that whether HARQ-ACK information is to be provided is indicated by a DCI, the first-type PDSCH reception means: a PDSCH reception being scheduled by the first-type DCI that indicates provision of the HARQ-ACK information.

In one embodiment, when the first information indicates that whether HARQ-ACK information is to be provided is indicated by a DCI, the first-type PDSCH reception comprises: a PDSCH reception being scheduled by the first-type DCI other than the DCI that indicates non-provision of the HARQ-ACK information.

In one embodiment, when the first information indicates that whether HARQ-ACK information is to be provided is indicated by a DCI, the first-type PDSCH reception comprises: a PDSCH reception being scheduled by the first-type DCI other than the PDSCH reception scheduled by the DCI that indicates non-provision of the HARQ-ACK information.

In one embodiment, when the first information indicates that whether HARQ-ACK information is to be provided is indicated by a DCI, the first-type PDSCH reception comprises: a PDSCH reception being scheduled by the first-type DCI that indicates provision of the HARQ-ACK information.

In one embodiment, when the first information indicates that whether HARQ-ACK information is to be provided is indicated by a DCI, the first-type PDSCH reception means: a PDSCH reception being associated to the first-type DCI that indicates provision of the HARQ-ACK information.

In one embodiment, when the first information indicates that whether HARQ-ACK information is to be provided is indicated by a DCI: a PDSCH reception scheduled by a first-type DCI mentioned above that indicates non-provision of HARQ-ACK information.is not the first-type PDSCH reception.

In one embodiment, when the first information indicates that whether HARQ-ACK information is to be provided is indicated by a DCI: any PDSCH reception scheduled by the first-type DCI that indicates non-provision of HARQ-ACK information.is not the first-type PDSCH reception.

In one embodiment, when the first information indicates that whether HARQ-ACK information is to be provided is indicated by a DCI, the first-type PDSCH reception means: a PDSCH reception associated to the first-type DCI other than the PDSCH reception scheduled by the first-type DCI that indicates non-provision of the HARQ-ACK information.

In one embodiment, when the first information indicates that whether HARQ-ACK information is to be provided is indicated by a DCI, the first-type PDSCH reception means: a PDSCH reception being associated to the first-type DCI other than the first-type DCI that indicates non-provision of the HARQ-ACK information.

In one embodiment, when the first information indicates that whether HARQ-ACK information is to be provided is indicated by a DCI, the first-type PDSCH reception means: a PDSCH reception being associated to the first-type DCI other than the DCI that indicates non-provision of the HARQ-ACK information.

In one embodiment, when the first information indicates provision of HARQ-ACK information, the first-type PDSCH reception means: a PDSCH reception being scheduled by the first-type DCI.

In one embodiment, when the first information indicates provision of HARQ-ACK information, any PDSCH reception scheduled by the first-type DCI is the first-type PDSCH reception.

In one embodiment, when the first information indicates provision of HARQ-ACK information, the first-type PDSCH reception means: a PDSCH reception being associated to the first-type DCI.

In one embodiment, when the first information indicates provision of HARQ-ACK information, the first-type PDSCH reception means: a PDSCH reception being associated to any first-type DCI mentioned above.

In one embodiment, the statement that the first information indicates that whether HARQ-ACK information is to be provided is indicated by a DCI comprises that the value of the first information is set to dci-enabler.

In one embodiment, the statement that the first information indicates provision of HARQ-ACK information comprises that the value of the first information is set to enabled.

In one embodiment, the statement the first-type DCI applying the first RNTI comprises that a Cyclic redundancy check (CRC) of the first-type DCI is scrambled by the first RNTI.

In one embodiment, when the CRC of a DCI is scrambled by the first RNTI, this DCI is the first-type DCI.

In one embodiment, when a DCI is the first-type DCI, the CRC of this DCI is scrambled by the first RNTI.

In one embodiment, the first information is for the first RNTI.

In one embodiment, the target DCI is a first-type DCI mentioned above.

In one embodiment, the statement in the present application that "the first information indicates that whether HARQ-ACK information is to be provided is indicated by a DCI" comprises that the first information indicates: whether HARQ-ACK information is to be provided being indicated by a DCI.

In one embodiment, the statement in the present application that "the first information indicates that whether HARQ-ACK information is to be provided is indicated by a DCI" comprises that the first information indicates that it is the DCI that indicates whether HARQ-ACK information is to be provided.

In one embodiment, the statement in the present application that "the first information indicates that whether HARQ-ACK information is to be provided is indicated by a DCI" comprises that the value of the first information denotes that it is the DCI that indicates whether HARQ-ACK information is to be provided.

In one embodiment, the statement in the present application that "the first information indicates provision of HARQ-ACK information" comprises that the value of the first information denotes the provision of HARQ-ACK information.

### Embodiment 2

Embodiment 2 illustrates a schematic diagram of a network architecture according to the present application, as shown in FIG. 2.

FIG. 2 is a diagram illustrating a network architecture 200 of 5G NR, Long-Term Evolution (LTE) and Long-Term Evolution Advanced (LTE-A) systems. The 5G NR or LTE network architecture 200 may be called an Evolved Packet System (EPS) 200 or other suitable terminology. The EPS 200 may comprise one or more UEs 201, an NG-RAN 202, a Evolved Packet Core (EPC)/5G-Core Network (5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field(AMF)/User Plane Function (UPF) 211, other MMEs/AMFs/UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212. The S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the UE 201 corresponds to the second node in the present application.

In one embodiment, the UE 201 is a UE.

In one embodiment, the UE 201 is a UE supporting multicast transmission.

In one embodiment, the UE 201 is a normal UE.

In one embodiment, the gNB 203 corresponds to the first node in the present application.

In one embodiment, the gNB203 corresponds to the second node in the present application.

In one embodiment, the UE 201 corresponds to the first node in the present application, and the gNB203 corresponds to the second node in the present application.

In one embodiment, the gNB 203 is a MacroCellular base station.

In one embodiment, the gNB203 is a Micro Cell base station.

In one embodiment, the gNB 203 is a PicoCell base station.

In one embodiment, the gNB203 is a Femtocell.

In one embodiment, the gNB203 is a base station supporting large time-delay difference.

In one embodiment, the gNB203 is a flight platform.

In one embodiment, the gNB203 is satellite equipment.

In one embodiment, the first node and the second node in the present application both correspond to the UE 201, for instance, V2X communications is performed between the first node and the second node.

### Embodiment 3

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first communication node (UE, gNB or, RSU in V2X) and a second communication node (gNB, UE, or RSU in V2X), or between two UEs, is represented by three layers, i.e., layer 1, layer 2 and layer 3. The layer 1 (L1) is the lowest layer which performs signal processing functions of various PHY layers. The L1 is called PHY 301 in the present application. The layer 2 (L2) 305 is above the PHY 301, and is in charge of the link between a first communication node and a second communication node as well as between two UEs via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the second communication nodes. The PDCP sublayer 304 provides multiplexing among variable radio bearers and logical channels. The PDCP sublayer 304 provides security by encrypting packets and also support for inter-cell handover of the first communication node between second communication nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second communication node and the first communication node. The radio protocol architecture in the user plane 350 comprises the L1 layer and the L2 layer. In the user plane 350, the radio protocol architecture used for the first communication node and the second communication node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first communication node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first information in the present application is generated by the RRC sublayer 306.

In one embodiment, the first information in the present application is generated by the MAC sublayer 302.

In one embodiment, the target DCI in the present application is generated by the PHY 301.

In one embodiment, the first PUCCH in the present application is generated by the PHY 301.

In one embodiment, the target information in the present application is generated by the RRC sublayer 306.

In one embodiment, the target information in the present application is generated by the MAC sublayer 302.

In one embodiment, a signaling in the first signaling group in the present application is generated by the PHY 301.

In one embodiment, a signaling in the characteristic signaling group in the present application is generated by the PHY 301.

### Embodiment 4

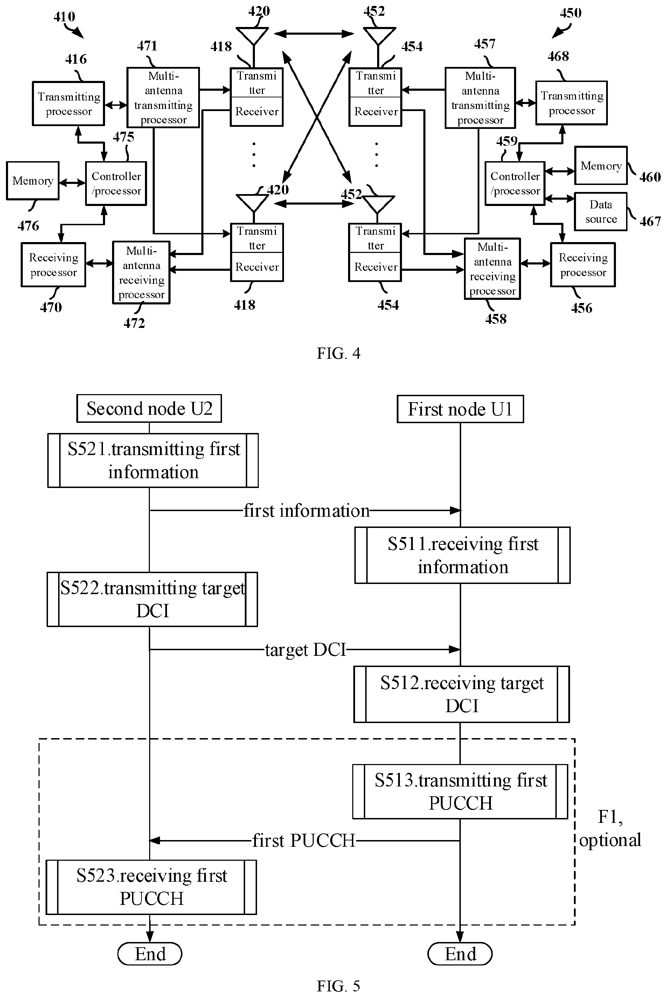

Embodiment 4 illustrates a schematic diagram of a first communication device and a second communication device according to the present application, as shown in FIG. 4. FIG. 4 is a block diagram of a first communication device 410 and a second communication device 450 in communication with each other in an access network.

The first communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from a core network is provided to the controller/processor 475. The controller/processor 475 provides functions of the L2 layer. In the transmission from the first communication device 410 to the second communication device 450, the controller/processor 475 provides header compression, encryption, packet segmentation and reordering, and multiplexing between a logical channel and a transport channel, and radio resource allocation of the second communication device 450 based on various priorities. The controller/processor 475 is also responsible for a retransmission of a lost packet, and a signaling to the second communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 450 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any second communication device 450-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted by the first communication device 410 on the physical channel. Next, the higher-layer data and control signal are provided to the controller/processor 459. The controller/processor 459 provides functions of the L2 layer. The controller/processor 459 can be associated with the memory 460 that stores program code and data; the memory 460 may be called a computer readable medium. In the transmission from the first communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in the transmission from the first communication node 410 to the second communication node 450, the controller/processor 459 performs header compression, encryption, packet segmentation and reordering, and multiplexing between a logical channel and a transport channel based on radio resource allocation of the first communication device 410 so as to provide the L2 layer functions used for the user plane and the control plane. The controller/processor 459 is also in charge of a retransmission of a lost packet and a signaling to the first communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data; the memory 476 may be called a computer readable medium. In the transmission between the second communication device 450 and the first communication device 410, the controller/processor 475 provides de-multiplexing between a transport channel and a logical channel, packet reassembling, decrypting, header decompression, control signal processing so as to recover a higher-layer packet from the second communication device (UE) 450. The higher-layer packet coming from the controller/processor 475 may be provided to the core network.

In one embodiment, the first node in the present application comprises the second communication device 450, and the second node in the present application comprises the first communication device 410.

In one subembodiment, the first node is a UE, and the second node is a UE.

In one subembodiment, the first node is a UE, and the second node is a relay node.

In one subembodiment, the first node is a relay node, and the second node is a UE.

In one subembodiment, the first node is a UE, and the second node is a base station.

In one subembodiment, the first node is a relay node, and the second node is a base station.

In one subembodiment, the second node is a UE, and the first node is a base station.

In one subembodiment, the second node is a relay node, and the first node is a base station.

In one subembodiment, the second communication device 450 comprises: at least one controller/processor; the at least one controller/processor is in charge of HARQ operation.

In one subembodiment, the first communication device 410 comprises: at least one controller/processor; the at least one controller/processor is in charge of HARQ operation.

In one subembodiment, the first communication device 410 comprises: at least one controller/processor; the at least one controller/processor is in charge of error detections using ACK and/or NACK protocols to support HARQ operation.

In one embodiment, the second communication device 450 comprises at least one processor and at least one memory. The at least one memory comprises computer program codes; the at least one memory and the computer program codes are configured to be used in collaboration with the at least one processor. The second communication device 450 at least receives first information, the first information being used to indicate whether HARQ-ACK information is to be provided for a first RNTI, the first RNTI being configurable; and receives a target DCI; herein, the target DCI includes a first field; for the target DCI, a value of the first field being included denotes a total number of first-type {serving cell, PDCCH monitoring occasion}-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information.

In one subembodiment, the second communication device 450 corresponds to the first node in the present application.

In one embodiment, the second communication device 450 comprises a memory that stores a computer readable instruction program. The computer readable instruction program generates actions when executed by at least one processor. The actions include: receiving first information, the first information being used to indicate whether HARQ-ACK information is to be provided for a first RNTI, the first RNTI being configurable; and receiving a target DCI; herein, the target DCI includes a first field; for the target DCI, a value of the first field being included denotes a total number of first-type {serving cell, PDCCH monitoring occasion}-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information.

In one subembodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least transmits first information, the first information being used to indicate whether HARQ-ACK information is to be provided for a first RNTI, the first RNTI being configurable; and transmits a target DCI; herein, the target DCI includes a first field; for the target DCI, a value of the first field being included denotes a total number of first-type {serving cell, PDCCH monitoring occasion}-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information.

In one subembodiment, the first communication device 410 corresponds to the second node in the present application.

In one embodiment, the first communication device 410 comprises a memory that stores a computer readable instruction program. The computer readable instruction program generates actions when executed by at least one processor. The actions include: transmitting first information, the first information being used to indicate whether HARQ-ACK information is to be provided for a first RNTI, the first RNTI being configurable; and transmitting a target DCI; herein, the target DCI includes a first field; for the target DCI, a value of the first field being included denotes a total number of first-type {serving cell, PDCCH monitoring occasion }-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information.

In one subembodiment, the first communication device 410 corresponds to the second node in the present application.

In one embodiment, at least one of the antenna 452, the receiver 454, the multi-antenna receiving processor 458, the receiving processor 456, the controller/processor 459, the memory 460, or the data source 467 is used for receiving the first information in the present application.

In one embodiment, at least one of the antenna 420, the transmitter 418, the multi-antenna transmitting processor 471, the transmitting processor 416, the controller/processor 475 or the memory 476 is used for transmitting the first information in the present application.

In one embodiment, at least one of the antenna 452, the receiver 454, the multi-antenna receiving processor 458, the receiving processor 456, the controller/processor 459, the memory 460, or the data source 467 is used for receiving the target DCI in the present application.

In one embodiment, at least one of the antenna 420, the transmitter 418, the multi-antenna transmitting processor 471, the transmitting processor 416, the controller/processor 475 or the memory 476 is used for transmitting the target DCI in the present application.

In one embodiment, at least one of the antenna 452, the transmitter 454, the multi-antenna transmitting processor 458, the transmitting processor 468, the controller/processor 459, the memory 460 or the data source 467 is used for transmitting the first PUCCH in the present application.

In one embodiment, at least one of the antenna 420, the receiver 418, the multi-antenna receiving processor 472, the receiving processor 470, the controller/processor 475, or the memory 476 is used for receiving the first PUCCH in the present application.

In one embodiment, the second communication device 450 comprises at least one processor and at least one memory. The at least one memory comprises computer program codes; the at least one memory and the computer program codes are configured to be used in collaboration with the at least one processor. The second communication device 450 at least receives target information, the target information being for a target RNTI and used to indicate whether HARQ-ACK information is to be provided, the target RNTI being configurable; and receives a first signaling group; herein, for any signaling in the first signaling group, a value of a target field being included denotes an accumulative number of characteristic {serving cell, time interval}-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

In one subembodiment, the second communication device 450 corresponds to the first node in the present application.

In one embodiment, the second communication device 450 comprises a memory that stores a computer readable instruction program. The computer readable instruction program generates actions when executed by at least one processor. The actions include: receiving target information, the target information being for a target RNTI and used to indicate whether HARQ-ACK information is to be provided, the target RNTI being configurable; and receiving a first signaling group; herein, for any signaling in the first signaling group, a value of a target field being included denotes an accumulative number of characteristic {serving cell, time interval}-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

In one subembodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least transmits target information, the target information being for a target RNTI and used to indicate whether HARQ-ACK information is to be provided, the target RNTI being configurable; and transmits a first signaling group; herein, for any signaling in the first signaling group, a value of a target field being included denotes an accumulative number of characteristic {serving cell, time interval }-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

In one subembodiment, the first communication device 410 corresponds to the second node in the present application.

In one embodiment, the first communication device 410 comprises a memory that stores a computer readable instruction program. The computer readable instruction program generates actions when executed by at least one processor. The actions include: transmitting target information, the target information being for a target RNTI and used to indicate whether HARQ-ACK information is to be provided, the target RNTI being configurable; and transmitting a first signaling group; herein, for any signaling in the first signaling group, a value of a target field being included denotes an accumulative number of characteristic {serving cell, time interval }-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

In one subembodiment, the first communication device 410 corresponds to the second node in the present application.

In one embodiment, at least one of the antenna 452, the receiver 454, the multi-antenna receiving processor 458, the receiving processor 456, the controller/processor 459, the memory 460, or the data source 467 is used for receiving the target information in the present application.

In one embodiment, at least one of the antenna 420, the transmitter 418, the multi-antenna transmitting processor 471, the transmitting processor 416, the controller/processor 475 or the memory 476 is used for transmitting the target information in the present application.

In one embodiment, at least one of the antenna 452, the receiver 454, the multi-antenna receiving processor 458, the receiving processor 456, the controller/processor 459, the memory 460, or the data source 467 is used for receiving the first signaling group in the present application.

In one embodiment, at least one of the antenna 420, the transmitter 418, the multi-antenna transmitting processor 471, the transmitting processor 416, the controller/processor 475 or the memory 476 is used for transmitting the first signaling group in the present application.

In one embodiment, at least one of the antenna 452, the transmitter 454, the multi-antenna transmitting processor 458, the transmitting processor 468, the controller/processor 459, the memory 460 or the data source 467 is used for transmitting the first PUCCH in the present application.

In one embodiment, at least one of the antenna 420, the receiver 418, the multi-antenna receiving processor 472, the receiving processor 470, the controller/processor 475, or the memory 476 is used for receiving the first PUCCH in the present application.

### Embodiment 5

Embodiment 5 illustrates a flowchart of signal transmission according to one embodiment of the present application, as shown in FIG. 5. In FIG. 5, a first node U1 and a second node U2 are in communications via an air interface. Specially, steps marked by the dotted-line box F1 are optional.

The first node U1 receives first information in step S511; receives a target DCI in step S512; and transmits a first PUCCH in step S513.

The second node U2 transmits first information in step S521; transmits a target DCI in step S522; and receives a first PUCCH in step S523.

In Embodiment 5, the first information is used to indicate whether HARQ-ACK information is to be provided for a first RNTI, the first RNTI being configurable; the target DCI includes a first field; for the target DCI, a value of the first field being included denotes a total number of first-type {serving cell, PDCCH monitoring occasion }-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information; the first RNTI is a G-RNTI; when the first information indicates that whether HARQ-ACK information is to be provided is indicated by a DCI, the first-type PDSCH reception means a PDSCH reception associated to the first-type DCI other than the PDSCH reception scheduled by the DCI that indicates non-provision of the HARQ-ACK information.

In one subembodiment of Embodiment 5, when the first information indicates provision of HARQ-ACK information, the first-type PDSCH reception means a PDSCH reception being scheduled by the first-type DCI.

In one subembodiment of Embodiment 5, the first PUCCH carries a first HARQ-ACK bit block; the first HARQ-ACK bit block comprises HARQ-ACK bits for transport blocks (TBs) in a PDSCH scheduled by the target DCI, the first HARQ-ACK bit block depending on the value of the first field in the target DCI.

In one embodiment, the first node U1 is the first node in the present application.

In one embodiment, the second node U2 is the second node in the present application.

In one embodiment, the first node U1 is a UE.

In one embodiment, the first node U1 is a base station.

In one embodiment, the second node U2 is a base station.

In one embodiment, the second node U2 is a UE.

In one embodiment, an air interface between the second node U2 and the first node U1 is a Uu interface.

In one embodiment, an air interface between the second node U2 and the first node U1 includes a cellular link.

In one embodiment, an air interface between the second node U2 and the first node U1 is a PC5 interface.

In one embodiment, an air interface between the second node U2 and the first node U1 includes a sidelink.

In one embodiment, an air interface between the second node U2 and the first node U1 includes a radio interface between a base station and a UE.

In one embodiment, an air interface between the second node U2 and the first node U1 includes a radio interface between a satellite device and a UE.

In one embodiment, an air interface between the second node U2 and the first node U1 includes a radio interface between a UE and another UE.

In one embodiment, a problem to be solved in the present application includes: how to improve the efficiency of HARQ-ACK feedback.

In one embodiment, a problem to be solved in the present application includes: how to improve the efficiency of utilization of PUCCH resources or the transmission performance of PUCCH.

In one embodiment, a problem to be solved in the present application includes: how to define what is represented by the value of the first field in the target DCI.

In one embodiment, a problem to be solved in the present application includes: how to define the first-type {serving cell, PDCCH monitoring occasion}-pair.

In one embodiment, a problem to be solved in the present application includes: how to determine the first-type PDSCH reception.

In one embodiment, a problem to be solved in the present application includes: how to define the content of the indication of the DAI field based on the configuration of the HARQ-ACK feedback.

In one embodiment, a problem to be solved in the present application includes: how to define the content of the indication of the total DAI field based on the configuration of the HARQ-ACK feedback.

In one embodiment, a problem to be solved in the present application includes: how to optimize uplink transmission of control signaling.

In one embodiment, steps marked by the dashed-line box F1 exist.

In one embodiment, steps marked by the dashed-line box F1 do not exist.

In one embodiment, the PDSCH reception in this application is for the first node.

### Embodiment 6

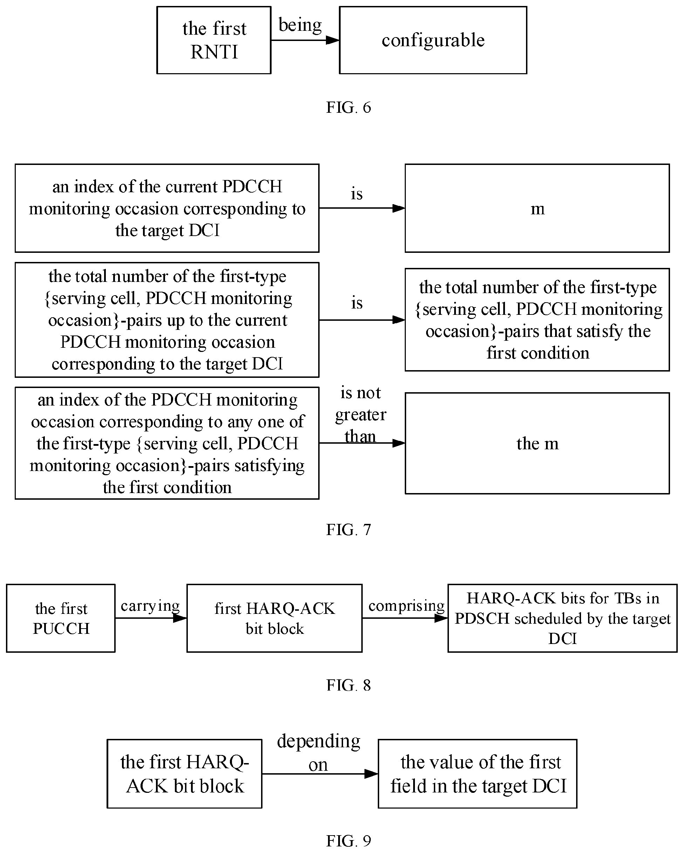

Embodiment 6 illustrates a schematic diagram explaining a first RNTI according to one embodiment of the present application, as shown in FIG. 6.

In Embodiment 6, the first RNTI is configurable.

In one embodiment, the statement that the first RNTI is configurable comprises: the first node being provided with at least the first RNTI.

In one embodiment, the first RNTI is configured by an RRC signaling.

In one embodiment, the first RNTI is configured in an information element (IE) MAC-CellGroupConfig.

In one embodiment, the first RNTI is a G-RNTI.

In one embodiment, the first RNTI is a G-CS-RNTI.

In one embodiment, the first RNTI is an RNTI for multicasting.

In one embodiment, the first RNTI is a Radio Network Temporary Identifier (RNTI) for Point to Multipoint (PTM) scheduling and transmission.

In one embodiment, the first RNTI is an RNTI that is used to scramble a CRC of a multicast DCI format.

In one embodiment, the first RNTI is an RNTI that is used to scramble a CRC of a broadcast DCI format.

### Embodiment 7

Embodiment 7 illustrates a schematic diagram explaining a total number of first-type {serving cell, PDCCH monitoring occasion}-pairs up to a current PDCCH monitoring occasion corresponding to a target DCI according to one embodiment of the present application, as shown in FIG. 7.

In Embodiment 7, an index of the current PDCCH monitoring occasion corresponding to the target DCI is m, the m being a non-negative integer; the total number of the first-type {serving cell, PDCCH monitoring occasion}-pairs up to the current PDCCH monitoring occasion corresponding to the target DCI is: the total number of the first-type {serving cell, PDCCH monitoring occasion}-pairs that satisfy the first condition; an index of the PDCCH monitoring occasion corresponding to any one of the first-type {serving cell, PDCCH monitoring occasion }-pairs satisfying the first condition is not greater than the m.

In one embodiment, if the index of the PDCCH monitoring occasion corresponding to one first-type {serving cell, PDCCH monitoring occasion }-pair is not greater than the m, this first-type {serving cell, PDCCH monitoring occasion }-pair satisfies the first condition.

In one embodiment, a given {serving cell, PDCCH monitoring occasion}-pair is a first-type {serving cell, PDCCH monitoring occasion }-pair; for a non-negative integer m: if the index of the PDCCH monitoring occasion corresponding to the given {serving cell, PDCCH monitoring occasion }-pair is not greater than the m, then the given {serving cell, PDCCH monitoring occasion}-pair is one first-type {serving cell, PDCCH monitoring occasion}-pair up to the PDCCH monitoring occasion with index m.

In one subembodiment, if the index of the PDCCH monitoring occasion corresponding to the given {serving cell, PDCCH monitoring occasion}-pair is greater than the m, the given {serving cell, PDCCH monitoring occasion}-pair is not the first-type {serving cell, PDCCH monitoring occasion}-pair up to the PDCCH monitoring occasion with index m.

In one embodiment, the current PDCCH monitoring occasion corresponding to the target DCI has an index of m, the m being a non-negative integer.

In one embodiment, the given {serving cell, PDCCH monitoring occasion}-pair is any one of the first-type {serving cell, PDCCH monitoring occasion}-pairs.

In one embodiment, the m is any non-negative integer less than M, and the M is equal to the cardinality of one set of PDCCH monitoring occasions.

In one embodiment, the one set of PDCCH monitoring occasions is configurable.

In one embodiment, the one set of PDCCH monitoring occasions is determined by the first node.

In one embodiment, the one set of PDCCH monitoring occasions is specific to the first RNTI.

In one embodiment, the one set of PDCCH monitoring occasions is defined as a union of PDCCH monitoring occasions configured on an active downlink BWP (i.e., Bandwidth part) of at least one serving cell.

In one embodiment, a given {serving cell, PDCCH monitoring occasion}-pair is a first-type {serving cell, PDCCH monitoring occasion }-pair; for a non-negative integer m: if the index of the PDCCH monitoring occasion corresponding to the given {serving cell, PDCCH monitoring occasion}-pair is less than the m, then the given {serving cell, PDCCH monitoring occasion}-pair is one first-type {serving cell, PDCCH monitoring occasion}-pair up to the PDCCH monitoring occasion with index m.

In one subembodiment, if the index of the PDCCH monitoring occasion corresponding to the given {serving cell, PDCCH monitoring occasion}-pair is no less than the m, the given {serving cell, PDCCH monitoring occasion}-pair is not the first-type {serving cell, PDCCH monitoring occasion}-pair up to the PDCCH monitoring occasion with index m.

In one embodiment, a given {serving cell, PDCCH monitoring occasion}-pair is a first-type {serving cell, PDCCH monitoring occasion}-pair; for a non-negative integer m: if the PDCCH monitoring occasion corresponding to the given {serving cell, PDCCH monitoring occasion}-pair is no later than the PDCCH monitoring occasion with index m in time domain, then the given {serving cell, PDCCH monitoring occasion}-pair is one first-type {serving cell, PDCCH monitoring occasion}-pair up to the PDCCH monitoring occasion with index m.

In one subembodiment, if the PDCCH monitoring occasion corresponding to the given {serving cell, PDCCH monitoring occasion}-pair is later than the PDCCH monitoring occasion with index m in time domain, the given {serving cell, PDCCH monitoring occasion}-pair is not the first-type {serving cell, PDCCH monitoring occasion}-pair up to the PDCCH monitoring occasion with index m.

In one embodiment, the current PDCCH monitoring occasion corresponding to the target DCI has an index of m, the m being a non-negative integer; a given {serving cell, PDCCH monitoring occasion}-pair is a first-type {serving cell, PDCCH monitoring occasion}-pair; if the index of the PDCCH monitoring occasion corresponding to the given {serving cell, PDCCH monitoring occasion}-pair is no greater than the m, then the given {serving cell, PDCCH monitoring occasion}-pair is counted for the total number of the first-type {serving cell, PDCCH monitoring occasion}-pairs up to the current PDCCH monitoring occasion corresponding to the target DCI.

In one subembodiment, if the index of the PDCCH monitoring occasion corresponding to the given {serving cell, PDCCH monitoring occasion}-pair is greater than the m, then the given {serving cell, PDCCH monitoring occasion }-pair is not counted for the total number of the first-type {serving cell, PDCCH monitoring occasion}-pairs up to the current PDCCH monitoring occasion corresponding to the target DCI.

In one embodiment, the current PDCCH monitoring occasion corresponding to the target DCI has an index of m, the m being a non-negative integer; a given {serving cell, PDCCH monitoring occasion}-pair is a first-type {serving cell, PDCCH monitoring occasion}-pair; if the index of the PDCCH monitoring occasion corresponding to the given {serving cell, PDCCH monitoring occasion}-pair is no less than the m, then the given {serving cell, PDCCH monitoring occasion}-pair is counted for the total number of the first-type {serving cell, PDCCH monitoring occasion}-pairs up to the current PDCCH monitoring occasion corresponding to the target DCI.

In one subembodiment, if the index of the PDCCH monitoring occasion corresponding to the given {serving cell, PDCCH monitoring occasion}-pair is no less than the m, then the given {serving cell, PDCCH monitoring occasion }-pair is not counted for the total number of the first-type {serving cell, PDCCH monitoring occasion}-pairs up to the current PDCCH monitoring occasion corresponding to the target DCI.

In one embodiment, the current PDCCH monitoring occasion corresponding to the target DCI has an index of m, the m being a non-negative integer; a {serving cell i1, PDCCH monitoring occasion j1}-pair is a first-type {serving cell, PDCCH monitoring occasion}-pair, where the i1 is the index of serving cell and the j1 is the index of PDCCH monitoring occasion, the i1 and j1 being both non-negative integers; if the j1 is no greater than the m, then the {serving cell i1, PDCCH monitoring occasion j1}-pair is counted for the total number of the first-type {serving cell, PDCCH monitoring occasion}-pairs up to the current PDCCH monitoring occasion corresponding to the target DCI.

In one embodiment, the current PDCCH monitoring occasion corresponding to the target DCI has an index of m, the m being a non-negative integer; a {serving cell i1, PDCCH monitoring occasion j1}-pair is a first-type {serving cell, PDCCH monitoring occasion}-pair, where the i1 is the index of serving cell and the j1 is the index of PDCCH monitoring occasion, the i1 and j1 being both non-negative integers; if the j1 is greater than the m, then the {serving cell i1, PDCCH monitoring occasion j1}-pair is not counted for the total number of the first-type {serving cell, PDCCH monitoring occasion}-pairs up to the current PDCCH monitoring occasion corresponding to the target DCI.

In one embodiment, a {serving cell i1, PDCCH monitoring occasion j1}-pair is a first-type {serving cell, PDCCH monitoring occasion}-pair, where the i1 is the index of serving cell and the j1 is the index of PDCCH monitoring occasion, the i1 and j1 being both non-negative integers; if the start time for the PDCCH monitoring occasion j1 is earlier than the start time for the current PDCCH monitoring occasion corresponding to the target DCI, then the {serving cell i1, PDCCH monitoring occasion j1}-pair is counted for the total number of the first-type {serving cell, PDCCH monitoring occasion}-pairs up to the current PDCCH monitoring occasion corresponding to the target DCI.

In one embodiment, a {serving cell i1, PDCCH monitoring occasion j1}-pair is a first-type {serving cell, PDCCH monitoring occasion}-pair, where the i1 is the index of serving cell and the j1 is the index of PDCCH monitoring occasion, the i1 and j1 being both non-negative integers; if the start time for the PDCCH monitoring occasion j1 is no later than the start time for the current PDCCH monitoring occasion corresponding to the target DCI, then the {serving cell i1, PDCCH monitoring occasion j1}-pair is counted for the total number of the first-type {serving cell, PDCCH monitoring occasion}-pairs up to the current PDCCH monitoring occasion corresponding to the target DCI.

In one embodiment, a {serving cell i1, PDCCH monitoring occasion j1}-pair is a first-type {serving cell, PDCCH monitoring occasion}-pair, where the i1 is the index of serving cell and the j1 is the index of PDCCH monitoring occasion, the i1 and j1 being both non-negative integers; if the PDCCH monitoring occasion j1 is the current PDCCH monitoring occasion corresponding to the target DCI, then the {serving cell i1, PDCCH monitoring occasion j1}-pair is counted for the total number of the first-type {serving cell, PDCCH monitoring occasion}-pairs up to the current PDCCH monitoring occasion corresponding to the target DCI.

In one embodiment, a {serving cell i1, PDCCH monitoring occasion j1}-pair is a first-type {serving cell, PDCCH monitoring occasion}-pair, where the i1 is the index of serving cell and the j1 is the index of PDCCH monitoring occasion, the i1 and j1 being both non-negative integers; if the start time for the PDCCH monitoring occasion j1 is later than the start time for the current PDCCH monitoring occasion corresponding to the target DCI, then the {serving cell i1, PDCCH monitoring occasion j1}-pair is not counted for the total number of the first-type {serving cell, PDCCH monitoring occasion}-pairs up to the current PDCCH monitoring occasion corresponding to the target DCI.

### Embodiment 8

Embodiment 8 illustrates a schematic diagram of relations among a first PUCCH, a first HARQ-ACK bit block and a target DCI according to one embodiment of the present application, as shown in FIG. 8.

In Embodiment 8, the first PUCCH carries a first HARQ-ACK bit block, the first HARQ-ACK bit block comprising HARQ-ACK bits for transport blocks (TBs) in a PDSCH scheduled by the target DCI.

In one embodiment, the expression "transmitting a first PUCCH, the first PUCCH carrying a first HARQ-ACK bit block" comprises: the first HARQ-ACK bit block being transmitted in the first PUCCH.

In one embodiment, the phrase the first PUCCH carrying a first HARQ-ACK bit block comprises: the first PUCCH (i.e., Physical uplink control channel) carrying HARQ-ACK information represented by the first HARQ-ACK bit block.

In one embodiment, the first HARQ-ACK bit block is transmitted in the first PUCCH after being through at least Channel coding.

In one embodiment, the first HARQ-ACK bit block is transmitted in the first PUCCH after being through at least Modulation as well as Mapping to physical resources.

In one embodiment, the first HARQ-ACK bit block is transmitted in the first PUCCH after being through at least Channel coding, Modulation as well as Mapping to physical resources.

In one embodiment, the first HARQ-ACK bit block comprises a dynamic HARQ-ACK codebook.

In one embodiment, the first HARQ-ACK bit block comprises a Type-2 HARQ-ACK codebook.

In one embodiment, the first HARQ-ACK bit block is included in a dynamic HARQ-ACK codebook.

In one embodiment, the first HARQ-ACK bit block is included in a Type-2 HARQ-ACK codebook.

In one embodiment, at least one HARQ-ACK bit in the first HARQ-ACK bit block denotes multicast HARQ-ACK (i.e., Hybrid automatic repeat request acknowledgement) information.

In one embodiment, the target DCI indicates a slot occupied for the transmitting of the first PUCCH.

In one embodiment, the target DCI indicates a PUCCH resource occupied by the first PUCCH.

In one embodiment, the target DCI is the first-type DCI that indicates the provision of HARQ-ACK information when the first information indicates that whether HARQ-ACK information is to be provided is indicated by a DCI.

### Embodiment 9

Embodiment 9 illustrates a schematic diagram of a relation between a first HARQ-ACK bit block and the value of a first field in a target DCI according to one embodiment of the present application, as shown in FIG. 9.

In Embodiment 9, the first HARQ-ACK bit block depends on the value of the first field in the target DCI.

In one embodiment, the value of the first field in the target DCI is used to determine the first HARQ-ACK bit block.

In one embodiment, a total number of HARQ-ACK bits included in the first HARQ-ACK bit block is dependent on the value of the first field in the target DCI.

In one embodiment, the value of the first field in the target DCI is used to indicate a total number of HARQ-ACK bits included in the first HARQ-ACK bit block.

### Embodiment 10

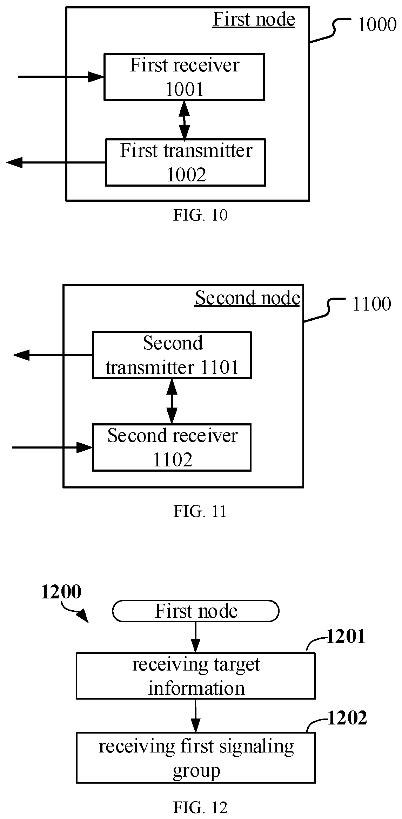

Embodiment 10 illustrates a structure block diagram of a processing device in a first node, as shown in FIG. 10. In FIG. 10, a first node processing device 1000 comprises a first receiver 1001 and a first transmitter 1002.

In one embodiment, the first node 1000 is a base station.

In one embodiment, the first node 1000 is a UE.

In one embodiment, the first node 1000 is a relay node.

In one embodiment, the first node 1000 is vehicle-mounted communication equipment.

In one embodiment, the first node 1000 is a UE supporting V2X communications.

In one embodiment, the first node 1000 is a relay node supporting V2X communications.

In one embodiment, the first node 1000 is a UE supporting operations on high-frequency spectrum.

In one embodiment, the first node 1000 is a UE supporting operations on shared spectrum.

In one embodiment, the first node 1000 is a UE supporting XR services.

In one embodiment, the first node 1000 is a UE supporting multicast transmission.

In one embodiment, the first receiver 1001 comprises at least one of the antenna 452, the receiver 454, the multi-antenna receiving processor 458, the receiving processor 456, the controller/processor 459, the memory 460 or the data source 467 in FIG. 4 of the present application.

In one embodiment, the first receiver 1001 comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1001 comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1001 comprises at least the first three of the antenna 452, the receiver 454, the multi-antenna receiving processor 458, the receiving processor 456, the controller/processor 459, the memory 460 and the data source 467 in FIG. 4 of the present application.

In one embodiment, the first receiver 1001 comprises at least the first two of the antenna 452, the receiver 454, the multi-antenna receiving processor 458, the receiving processor 456, the controller/processor 459, the memory 460 and the data source 467 in FIG. 4 of the present application.

In one embodiment, the first transmitter 1002 comprises at least one of the antenna 452, the transmitter 454, the multi-antenna transmitting processor 457, the transmitting processor 468, the controller/processor 459, the memory 460 or the data source 467 in FIG. 4 of the present application.

In one embodiment, the first transmitter 1002 comprises at least the first five of the antenna 452, the transmitter 454, the multi-antenna transmitting processor 457, the transmitting processor 468, the controller/processor 459 the memory 460 and the data source 467 in FIG. 4 of the present application.

In one embodiment, the first transmitter 1002 comprises at least the first four of the antenna 452, the transmitter 454, the multi-antenna transmitting processor 457, the transmitting processor 468, the controller/processor 459 the memory 460 and the data source 467 in FIG. 4 of the present application.

In one embodiment, the first transmitter 1002 comprises at least the first three of the antenna 452, the transmitter 454, the multi-antenna transmitting processor 457, the transmitting processor 468, the controller/processor 459 the memory 460 and the data source 467 in FIG. 4 of the present application.

In one embodiment, the first transmitter 1002 comprises at least the first two of the antenna 452, the transmitter 454, the multi-antenna transmitting processor 457, the transmitting processor 468, the controller/processor 459 the memory 460 and the data source 467 in FIG. 4 of the present application.

In one embodiment, the first receiver 1001 receives first information, the first information being used to indicate whether HARQ-ACK information is to be provided for a first RNTI, the first RNTI being configurable; and receives a target DCI; herein, the target DCI includes a first field; for the target DCI, a value of the first field being included denotes a total number of first-type {serving cell, PDCCH monitoring occasion}-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information.

In one embodiment, the first RNTI is a G-RNTI or a G-CS-RNTI.

In one embodiment, when the first information indicates that whether HARQ-ACK information is to be provided is indicated by a DCI, the first-type PDSCH reception means: a PDSCH reception associated to the first-type DCI other than the PDSCH reception scheduled by the DCI that indicates non-provision of the HARQ-ACK information.

In one embodiment, when the first information indicates provision of HARQ-ACK information, the first-type PDSCH reception means: a PDSCH reception being scheduled by the first-type DCI.

In one embodiment, the value of the first field in the target DCI is updated from PDCCH monitoring occasion to PDCCH monitoring occasion.

In one embodiment, the first transmitter 1002 transmits a first PUCCH, the first PUCCH carrying a first HARQ-ACK bit block; where the first HARQ-ACK bit block comprises HARQ-ACK bits for transport blocks (TBs) in a PDSCH scheduled by the target DCI.

In one embodiment, the first HARQ-ACK bit block depends on the value of the first field in the target DCI.

In one embodiment, the target DCI is a first-type DCI mentioned above.

In one embodiment, the first field is a total DAI.

### Embodiment 11

Embodiment 11 illustrates a structure block diagram a processing device in a second node according to one embodiment of the present application, as shown in FIG. 11. In FIG. 11, a second node processing device 1100 comprises a second transmitter 1101 and a second receiver 1102.

In one embodiment, the second node 1100 is a UE.

In one embodiment, the second node 1100 is a base station.

In one embodiment, the second node 1100 is satellite equipment.

In one embodiment, the second node 1100 is a relay node.

In one embodiment, the second node 1100 is vehicle-mounted communication equipment.

In one embodiment, the second node 1100 is UE supporting V2X communications.

In one embodiment, the second node 1100 is a device supporting operations on high-frequency spectrum.

In one embodiment, the second node 1100 is a device supporting operations on shared spectrum.

In one embodiment, the second node 1100 is a device supporting XR services.

In one embodiment, the second node 1100 is one piece of test apparatus, test equipment or test instrument.

In one embodiment, the second transmitter 1101 comprises at least one of the antenna 420, the transmitter 418, the multi-antenna transmitting processor 471, the transmitting processor 416, the controller/processor 475 or the memory 476 in FIG. 4 of the present application.

In one embodiment, the second transmitter 1101 comprises at least the first five of the antenna 420, the transmitter 418, the multi-antenna transmitting processor 471, the transmitting processor 416, the controller/processor 475 and the memory 476 in FIG. 4 of the present application.

In one embodiment, the second transmitter 1101 comprises at least the first four of the antenna 420, the transmitter 418, the multi-antenna transmitting processor 471, the transmitting processor 416, the controller/processor 475 and the memory 476 in FIG. 4 of the present application.

In one embodiment, the second transmitter 1101 comprises at least the first three of the antenna 420, the transmitter 418, the multi-antenna transmitting processor 471, the transmitting processor 416, the controller/processor 475 and the memory 476 in FIG. 4 of the present application.

In one embodiment, the second transmitter 1101 comprises at least the first two of the antenna 420, the transmitter 418, the multi-antenna transmitting processor 471, the transmitting processor 416, the controller/processor 475 and the memory 476 in FIG. 4 of the present application.

In one embodiment, the second receiver 1102 comprises at least one of the antenna 420, the receiver 418, the multi-antenna receiving processor 472, the receiving processor 470, the controller/processor 475 or the memory 476 in FIG. 4 of the present application.

In one embodiment, the second receiver 1102 comprises at least the first five of the antenna 420, the receiver 418, the multi-antenna receiving processor 472, the receiving processor 470, the controller/processor 475 and the memory 476 in FIG. 4 of the present application.

In one embodiment, the second receiver 1102 comprises at least the first four of the antenna 420, the receiver 418, the multi-antenna receiving processor 472, the receiving processor 470, the controller/processor 475 and the memory 476 in FIG. 4 of the present application.

In one embodiment, the second receiver 1102 comprises at least the first three of the antenna 420, the receiver 418, the multi-antenna receiving processor 472, the receiving processor 470, the controller/processor 475 and the memory 476 in FIG. 4 of the present application.

In one embodiment, the second receiver 1102 comprises at least the first two of the antenna 420, the receiver 418, the multi-antenna receiving processor 472, the receiving processor 470, the controller/processor 475 and the memory 476 in FIG. 4 of the present application.

In one embodiment, the second transmitter 1101 transmits first information, the first information being used to indicate whether HARQ-ACK information is to be provided for a first RNTI, the first RNTI being configurable; and transmits a target DCI; herein, the target DCI includes a first field; for the target DCI, a value of the first field being included denotes a total number of first-type {serving cell, PDCCH monitoring occasion}-pairs up to a current PDCCH monitoring occasion; there is a first-type PDSCH reception or HARQ-ACK information not for PDSCH reception in one first-type {serving cell, PDCCH monitoring occasion}-pair, the first-type PDSCH reception or the HARQ-ACK information not for PDSCH reception being associated to first-type DCI, the first-type DCI applying the first RNTI; the first-type PDSCH reception being related to the first information.

In one embodiment, the first RNTI is a G-RNTI or a G-CS-RNTI.

In one embodiment, when the first information indicates that whether HARQ-ACK information is to be provided is indicated by a DCI, the first-type PDSCH reception means: a PDSCH reception associated to the first-type DCI other than the PDSCH reception scheduled by the DCI that indicates non-provision of the HARQ-ACK information.

In one embodiment, when the first information indicates provision of HARQ-ACK information, the first-type PDSCH reception means: a PDSCH reception being scheduled by the first-type DCI.

In one embodiment, the value of the first field in the target DCI is updated from PDCCH monitoring occasion to PDCCH monitoring occasion.

In one embodiment, the second receiver 1102 receives a first PUCCH, the first PUCCH carrying a first HARQ-ACK bit block; where the first HARQ-ACK bit block comprises HARQ-ACK bits for transport blocks (TBs) in a PDSCH scheduled by the target DCI.

In one embodiment, the first HARQ-ACK bit block depends on the value of the first field in the target DCI.

In one embodiment, the target DCI is a first-type DCI mentioned above.

In one embodiment, the first field is a total DAI.

### Embodiment 12

Embodiment 12 illustrates a flowchart of processing of a first node according to one embodiment of the present application, as shown in FIG. 12.

In Embodiment 12, the first node in the present application receives target information in step 1201; and receives a first signaling group in step 1202.

In Embodiment 12, the target information is for a target RNTI and used to indicate whether HARQ-ACK information is to be provided, the target RNTI being configurable; for any signaling in the first signaling group, a value of a target field being included denotes an accumulative number of characteristic {serving cell, time interval}-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

In one embodiment, a signaling in the first signaling group comprises a layer 1 (L1) signaling.

In one embodiment, a signaling in the first signaling group comprises a layer 1 (L1) control signaling.

In one embodiment, a signaling in the first signaling group comprises one or more fields in a physical layer signaling.

In one embodiment, a signaling in the first signaling group is a signaling used for scheduling a PDSCH reception.

In one embodiment, a signaling in the first signaling group is a Downlink Control Information (DCI) format.

In one embodiment, a signaling in the first signaling group is a DCI.

In one embodiment, a signaling in the first signaling group is a multicast DCI format.

In one embodiment, a signaling in the first signaling group is a DCI format for multicasting.

In one embodiment, a signaling in the first signaling group comprises at least one field in a DCI format for multicasting.

In one embodiment, a signaling in the first signaling group is DCI format 4_0.

In one embodiment, a signaling in the first signaling group is DCI format 4_1.

In one embodiment, a signaling in the first signaling group is DCI format 4_2.

In one embodiment, the first signaling group comprises only one signaling.

In one embodiment, the first signaling group comprises multiple signalings.

In one embodiment, any signaling in the first signaling group is a DCI format.

In one embodiment, the first signaling group is: at least one DCI format.

In one embodiment, at least one signaling in the first signaling group applies the target RNTI.

In one embodiment, each signaling in the first signaling group applies the target RNTI.

In one embodiment, when a Cyclic redundancy check (CRC) of a signaling is scrambled by the target RNTI, the signaling applies the target RNTI.

In one embodiment, a signaling in the characteristic signaling group comprises a physical layer signaling.

In one embodiment, a signaling in the characteristic signaling group comprises a layer 1 (L1) signaling.

In one embodiment, a signaling in the characteristic signaling group comprises a layer 1 (L1) control signaling.

In one embodiment, a signaling in the characteristic signaling group comprises one or more fields in a physical layer signaling.

In one embodiment, a signaling in the characteristic signaling group is a signaling used for scheduling a PDSCH reception.

In one embodiment, a signaling in the characteristic signaling group is a Downlink Control Information (DCI) format.

In one embodiment, a signaling in the characteristic signaling group is a DCI.

In one embodiment, a signaling in the characteristic signaling group is a multicast DCI format.

In one embodiment, a signaling in the characteristic signaling group is a DCI format for multicasting.

In one embodiment, a signaling in the characteristic signaling group comprises at least one field in a DCI format for multicasting.

In one embodiment, a signaling in the characteristic signaling group is DCI format 4_0.

In one embodiment, a signaling in the characteristic signaling group is DCI format 4_1.

In one embodiment, a signaling in the characteristic signaling group is DCI format 4_2.

In one embodiment, the characteristic signaling group comprises only one signaling.

In one embodiment, the characteristic signaling group comprises multiple signalings.

In one embodiment, any signaling in the characteristic signaling group is a DCI format.

In one embodiment, the characteristic signaling group is: at least one DCI format.

In one embodiment, the expression "the characteristic signaling group applying the target RNTI" comprises that the CRC (i.e., Cyclic redundancy check) of each signaling in the characteristic signaling group is scrambled by the target RNTI.

In one embodiment, the characteristic signaling group is the first signaling group.

In one embodiment, the characteristic signaling group includes the first signaling group.

In one embodiment, the first signaling group comprises the characteristic signaling group.

In one embodiment, the target field comprises only 1 bit.

In one embodiment, the target field comprises 2 bits.

In one embodiment, the target field comprises multiple bits.

In one embodiment, the target field is a Downlink assignment index (DAI) field.

In one embodiment, the target field is a counter DAI field.

In one embodiment, a time interval in this application is: a PDCCH monitoring occasion.

In one embodiment, for any signaling in the first signaling group, the current time interval is a PDCCH monitoring occasion at which this signaling is detected.

In one embodiment, a current serving cell and a current time interval are for one signaling in the first signaling group.

In one embodiment, for any signaling in the first signaling group, the current serving cell is a serving cell that is used to receive the PDSCH scheduled by this signaling.

In one embodiment, any signaling in the first signaling group is detected in the current time interval it corresponds to.

In one embodiment, any signaling in the first signaling group schedules a PDSCH reception on the current serving cell it corresponds to.

In one embodiment, the characteristic HARQ-ACK information is: HARQ-ACK information bits being not for PDSCH reception and associated to the characteristic signaling group.

In one embodiment, the characteristic HARQ-ACK information is: HARQ-ACK information being not for PDSCH reception and associated to the characteristic signaling group.

In one embodiment, the characteristic HARQ-ACK information is: HARQ-ACK information being for a signaling in the characteristic signaling group and not for PDSCH reception.

In one embodiment, HARQ-ACK information not for PDSCH reception comprises: HARQ-ACK information for a DCI that does not schedule PDSCH.

In one embodiment, HARQ-ACK information not for PDSCH reception comprises: HARQ-ACK information for a DCI that indicates Semi-persistent scheduling (SPS) Physical downlink shared channel (PDSCH) release.

In one embodiment, HARQ-ACK information not for PDSCH reception comprises: HARQ-ACK information for a DCI (i.e., Downlink Control Information) that indicates a Transmission Configuration Indicator (TCI) state update.

In one embodiment, HARQ-ACK information not for PDSCH reception comprises: HARQ-ACK information for a DCI that indicates dormancy of a secondary cell (Scell) and does not schedule PDSCH reception.

In one embodiment, the statement "in the characteristic {serving cell, time interval}-pairs, characteristic PDSCH receptions or characteristic HARQ-ACK information are present" comprises that at least one characteristic PDSCH reception is present in one characteristic {serving cell, time interval}-pair.

In one embodiment, the statement "in the characteristic {serving cell, time interval}-pairs, characteristic PDSCH receptions or characteristic HARQ-ACK information are present" comprises that the characteristic HARQ-ACK information is present in one characteristic {serving cell, time interval}-pair.

In one embodiment, the statement "in the characteristic {serving cell, time interval}-pairs, characteristic PDSCH receptions or characteristic HARQ-ACK information are present" comprises that at least one said characteristic PDSCH reception or said characteristic HARQ-ACK information is present in each characteristic {serving cell, time interval }-pair.

In one embodiment, a characteristic PDSCH reception is present in each characteristic {serving cell, time interval }-pair.

In one embodiment, the expression that "the characteristic PDSCH receptions or the characteristic HARQ-ACK information are associated to a characteristic signaling group" comprises that the characteristic PDSCH receptions are associated to the characteristic signaling group.

In one embodiment, the expression that "the characteristic PDSCH receptions or the characteristic HARQ-ACK information are associated to a characteristic signaling group" comprises that the characteristic HARQ-ACK information is associated to the characteristic signaling group.

In one embodiment, the expression enabling HARQ-ACK information comprises: providing HARQ-ACK information.

In one embodiment, the expression disabling HARQ-ACK information comprises: not providing HARQ-ACK information.

In one embodiment, the expression enabling HARQ-ACK information comprises: providing HARQ-ACK information for PDSCH reception.

In one embodiment, the expression disabling HARQ-ACK information comprises: not providing HARQ-ACK information for PDSCH reception.

In one embodiment, the expression enabling HARQ-ACK information comprises: having HARQ-ACK information.

In one embodiment, the expression disabling HARQ-ACK information comprises: having no HARQ-ACK information.

In one embodiment, the expression enabling HARQ-ACK information comprises: having HARQ-ACK information for PDSCH reception.

In one embodiment, the expression disabling HARQ-ACK information comprises: having no HARQ-ACK information for PDSCH reception.

In one embodiment, the expression "enabling HARQ-ACK information" and the expression "providing HARQ-ACK information" in the present application are equivalent or interchangeable.

In one embodiment, the expression "disabling HARQ-ACK information" and the expression "not providing HARQ-ACK information" in the present application are equivalent or interchangeable.

In one embodiment, the expression providing HARQ-ACK information comprises: providing HARQ-ACK information for PDSCH reception.

In one embodiment, the expression not providing HARQ-ACK information comprises: not providing HARQ-ACK information for PDSCH reception.

In one embodiment, the expression providing HARQ-ACK information comprises: having HARQ-ACK information.

In one embodiment, the expression not providing HARQ-ACK information comprises: having no HARQ-ACK information.

In one embodiment, the expression providing HARQ-ACK information comprises: having HARQ-ACK information for PDSCH reception.

In one embodiment, the expression not providing HARQ-ACK information comprises: having no HARQ-ACK information for PDSCH reception.

In one embodiment, the expression providing HARQ-ACK information comprises: the first node shall provide HARQ-ACK information.

In one embodiment, the expression not providing HARQ-ACK information comprises: the first node shall not provide HARQ-ACK information.

In one embodiment, the target information explicitly indicates whether HARQ-ACK information is provided.

In one embodiment, the target information implicitly indicates whether HARQ-ACK information is provided.

In one embodiment, the expression that "the target information is for a target RNTI and used to indicate whether HARQ-ACK information is to be provided" comprises that the target information is for the target RNTI and is used to indicate whether HARQ-ACK information is to be provided.

In one embodiment, the expression that "the target information is for a target RNTI and used to indicate whether HARQ-ACK information is to be provided" comprises that the target information is used to indicate, with respect to the target RNTI: whether the first node is to provide HARQ-ACK information or not to provide HARQ-ACK information, or to determine that whether HARQ-ACK information is to be provided is indicated by a DCI.

In one embodiment, the expression that "the target information is for a target RNTI and used to indicate whether HARQ-ACK information is to be provided" comprises that the target information comprises configuration information specific to the target RNTI and used for determining whether HARQ-ACK information is to be provided.

In one embodiment, the expression that "the target information is for a target RNTI and used to indicate whether HARQ-ACK information is to be provided" comprises that the target information is configured with respect to the target RNTI and the target information is used to determine whether or not to provide HARQ-ACK information.

In one embodiment, the expression that "the target information is for a target RNTI and used to indicate whether HARQ-ACK information is to be provided" comprises that the target information is configured with respect to the target RNTI and the target information is used to indicate whether HARQ-ACK information is to be provided.

In one embodiment, the target information and the target RNTI are configured in a same field that includes Group-Config in its name.

In one embodiment, the target information comprises a Radio Resource Control (RRC) signaling.

In one embodiment, the target information comprises at least one field in at least one Information Element (IE).

In one embodiment, the target information comprises an IE MAC-CellGroupConfig.

In one embodiment, the target information comprises harq-FeedbackEnablerMulticast-r17.

In one embodiment, the target information is harq-FeedbackEnablerMulticast-r17.

In one embodiment, the target information is harq-FeedbackEnablerMulticast.

In one embodiment, the target information includes harq-FeedbackEnablerMulticast in its name.

In one embodiment, the target information is Group-Config-r17.

In one embodiment, the target information is Group-Config.

In one embodiment, the target information includes Group-Config in its name.

In one embodiment, a PDSCH reception comprises one PDSCH.

In one embodiment, the DCI format for SPS activation is not included in the characteristic signaling group.

In one embodiment, the characteristic signaling group does not include a DCI for SPS activation.

In one embodiment, the characteristic signaling group includes a multicast DCI format having a CRC scrambled by the target RNTI.

In one embodiment, any said characteristic {serving cell, time interval}-pair is a {serving cell, PDCCH monitoring occasion }-pair.

In one embodiment, at least one characteristic PDSCH reception or characteristic HARQ-ACK information is present in each characteristic {serving cell, time interval}-pair; any characteristic PDSCH reception or characteristic HARQ-ACK information is associated to one signaling in the characteristic signaling group.

In one embodiment, at least one said characteristic PDSCH reception is present in each said characteristic {serving cell, time interval}-pair; any said characteristic PDSCH reception is associated to one signaling in the characteristic signaling group.

In one embodiment, when a said characteristic PDSCH reception is not present in a {serving cell, PDCCH monitoring occasion}-pair, this {serving cell, PDCCH monitoring occasion}-pair is not a said characteristic {serving cell, time interval }-pair.

In one embodiment, when a said characteristic PDSCH reception and said characteristic HARQ-ACK information are not present in a {serving cell, PDCCH monitoring occasion}-pair, this {serving cell, PDCCH monitoring occasion }-pair is not a said characteristic {serving cell, time interval }-pair.

In one embodiment, a said characteristic {serving cell, time interval }-pair is for a same slot used for transmitting a PUCCH.

In one embodiment, a said characteristic {serving cell, time interval}-pair is for a same PUCCH.

In one embodiment, a said characteristic {serving cell, time interval}-pair is for a same PUCCH used for transmitting the HARQ-ACK information.

In one embodiment, the time intervals mentioned in this application are all PUCCH monitoring occasions for a same slot that is used for transmitting the PUCCH.

In one embodiment, the time intervals mentioned in this application are all PUCCH monitoring occasions for a same PUCCH.

In one embodiment, the time intervals mentioned in this application are all PUCCH monitoring occasions for a same PUCCH used for transmitting the HARQ-ACK information.

In one embodiment, the time intervals mentioned in this application are all PUCCH monitoring occasions for a same PUCCH used for transmitting the HARQ-ACK information in a same slot.

In one embodiment, a said characteristic PDSCH reception is present in one characteristic {serving cell, time interval }-pair, comprising that a serving cell corresponding to the said one characteristic {serving cell, time interval }-pair is used for the said characteristic PDSCH reception.

In one embodiment, a said characteristic PDSCH reception is present in one characteristic {serving cell, time interval}-pair, comprising that at least one said characteristic PDSCH reception is on a serving cell corresponding to the one said characteristic {serving cell, time interval}-pair, and, a DCI format scheduling the at least one said characteristic PDSCH reception is detected in a time interval corresponding to the one said characteristic {serving cell, time interval }-pair.

In one embodiment, the characteristic HARQ-ACK information is present in one characteristic {serving cell, time interval}-pair, comprising that a DCI format associated to the characteristic HARQ-ACK information is detected on a serving cell corresponding to the one characteristic {serving cell, time interval}-pair mentioned above.

In one embodiment, the characteristic HARQ-ACK information is present in one characteristic {serving cell, time interval}-pair, comprising that a DCI format associated to the characteristic HARQ-ACK information is detected in a time interval corresponding to the one characteristic {serving cell, time interval}-pair mentioned above.

In one embodiment, the characteristic HARQ-ACK information is present in one characteristic {serving cell, time interval}-pair, comprising that a DCI format having the characteristic HARQ-ACK information is detected on a serving cell corresponding to the one characteristic {serving cell, time interval}-pair mentioned above.

In one embodiment, the characteristic HARQ-ACK information is present in one characteristic {serving cell, time interval}-pair, comprising that a DCI format having the characteristic HARQ-ACK information is detected in a time interval corresponding to the one characteristic {serving cell, time interval}-pair mentioned above.

In one embodiment, when one signaling in the characteristic signaling group is detected in a time interval and this signaling in the characteristic signaling group schedules at least one characteristic PDSCH reception on one serving cell, the one serving cell and the time interval together forming one characteristic {serving cell, time interval}-pair, and the at least one characteristic PDSCH reception mentioned above is present in the one characteristic {serving cell, time interval }-pair mentioned above.

In one embodiment, when one signaling in the characteristic signaling group is detected in a time interval on one serving cell and this signaling in the characteristic signaling group schedules at least one characteristic PDSCH reception, the one serving cell and the time interval together forming one characteristic {serving cell, time interval}-pair, and the at least one characteristic PDSCH reception mentioned above is present in the one characteristic {serving cell, time interval }-pair mentioned above.

In one embodiment, when one signaling in the characteristic signaling group is detected in a time interval on one serving cell and this signaling in the characteristic signaling group has associated HARQ-ACK information and does not schedule PDSCH reception, the one serving cell and the time interval together forming one characteristic {serving cell, time interval }-pair, and the characteristic HARQ-ACK information is present in the one characteristic {serving cell, time interval}-pair mentioned above.

In one embodiment, when one signaling in the characteristic signaling group is detected in a time interval and this signaling in the characteristic signaling group has HARQ-ACK information for one serving cell and does not schedule PDSCH reception, the one serving cell and the time interval together forming one characteristic {serving cell, time interval }-pair, and the characteristic HARQ-ACK information is present in the one characteristic {serving cell, time interval}-pair mentioned above.

In one embodiment, any first-type DCI mentioned above indicates that HARQ-ACK information is transmitted in a PUCCH of the same slot.

In one embodiment, a said characteristic {serving cell, time interval }-pair is dependent on the target information.

In one embodiment, whether a {serving cell, PDCCH monitoring occasion }-pair is a said characteristic {serving cell, time interval}-pair is dependent on the target information.

In one embodiment, the target information is used to determine a said characteristic {serving cell, time interval }-pair.

In one embodiment, a said characteristic {serving cell, time interval}-pair is related to the target information.

In one embodiment, whether a {serving cell, PDCCH monitoring occasion }-pair is a said characteristic {serving cell, time interval }-pair is related to the target information.

In one embodiment, a said characteristic PDSCH reception is dependent on the target information.

In one embodiment, the target information is used to determine the first-type PDSCH reception.

In one embodiment, a said characteristic PDSCH reception is a PDSCH reception.

In one embodiment, a said characteristic PDSCH reception is a PDSCH reception for multicasting.

In one embodiment, when one characteristic PDSCH reception is associated to one signaling in the characteristic signaling group, this characteristic PDSCH reception is associated to the characteristic signaling group.

In one embodiment, when a signaling in the characteristic signaling group schedules one characteristic PDSCH reception, this characteristic PDSCH reception is associated to the characteristic signaling group.

In one embodiment, the expression that "the characteristic PDSCH receptions or the characteristic HARQ-ACK information are associated to a characteristic signaling group" comprises that a said characteristic PDSCH reception is scheduled by a signaling in the characteristic signaling group.

In one embodiment, one characteristic PDSCH reception mentioned above is associated to at least one signaling in the characteristic signaling group.

In one embodiment, any characteristic PDSCH reception mentioned above is associated to one signaling in the characteristic signaling group.

In one embodiment, when the target information indicates provision of HARQ-ACK information, one characteristic PDSCH reception is a PDSCH reception being scheduled by one signaling in the characteristic signaling group.

In one embodiment, the expression that "the characteristic PDSCH receptions or the characteristic HARQ-ACK information are associated to a characteristic signaling group" comprises that the characteristic HARQ-ACK information is HARQ-ACK information for a signaling in the characteristic signaling group that does not schedule PDSCH reception.

In one embodiment, the expression "the characteristic PDSCH receptions being related to the target information" comprises that when the target information indicates that whether HARQ-ACK information is to be provided is indicated by a DCI format, a said characteristic PDSCH reception is a PDSCH reception associated to the characteristic signaling group other than a PDSCH reception scheduled by a DCI format that indicates non-provision of the HARQ-ACK information.

In one embodiment, the expression "the characteristic PDSCH receptions being related to the target information" comprises that when the target information indicates that whether HARQ-ACK information is to be provided is indicated by a DCI format, a said characteristic PDSCH reception is a PDSCH reception scheduled by a signaling in the characteristic signaling group other than a DCI format that indicates non-provision of the HARQ-ACK information.

In one embodiment, the expression "the characteristic PDSCH receptions being related to the target information" comprises that when the target information indicates that whether HARQ-ACK information is to be provided is indicated by a DCI format, a said characteristic PDSCH reception is a PDSCH reception scheduled by a signaling in the characteristic signaling group other than a PDSCH reception scheduled by a DCI format that indicates non-provision of the HARQ-ACK information.

In one embodiment, the expression "the characteristic PDSCH receptions being related to the target information" comprises that when the target information indicates that whether HARQ-ACK information is to be provided is indicated by a DCI format, the characteristic PDSCH receptions are PDSCH receptions scheduled by DCI formats in the characteristic signaling group that indicate provision of HARQ-ACK information.

In one embodiment, the expression "the characteristic PDSCH receptions being related to the target information" comprises that when the target information indicates that whether HARQ-ACK information is to be provided is indicated by a DCI format, the characteristic PDSCH receptions are PDSCH receptions associated to DCI formats in the characteristic signaling group that indicate provision of HARQ-ACK information.

In one embodiment, the expression "the characteristic PDSCH receptions being related to the target information" comprises that when the target information indicates that whether HARQ-ACK information is to be provided is indicated by a DCI format, a said characteristic PDSCH reception includes: a PDSCH reception associated to the characteristic signaling group other than a PDSCH reception scheduled by a DCI format that indicates non-provision of the HARQ-ACK information.

In one embodiment, the expression "the characteristic PDSCH receptions being related to the target information" comprises that when the target information indicates that whether HARQ-ACK information is to be provided is indicated by a DCI format, a said characteristic PDSCH reception includes: a PDSCH reception scheduled by a signaling in the characteristic signaling group other than a DCI format that indicates non-provision of the HARQ-ACK information.

In one embodiment, the expression "the characteristic PDSCH receptions being related to the target information" comprises that when the target information indicates that whether HARQ-ACK information is to be provided is indicated by a DCI format, a said characteristic PDSCH reception includes: a PDSCH reception scheduled by a signaling in the characteristic signaling group other than a PDSCH reception scheduled by a DCI format that indicates non-provision of the HARQ-ACK information.

In one embodiment, the expression "the characteristic PDSCH receptions being related to the target information" comprises that when the target information indicates that whether HARQ-ACK information is to be provided is indicated by a DCI format, the characteristic PDSCH receptions include: PDSCH receptions scheduled by DCI formats in the characteristic signaling group that indicate provision of HARQ-ACK information.

In one embodiment, the expression "the characteristic PDSCH receptions being related to the target information" comprises that when the target information indicates that whether HARQ-ACK information is to be provided is indicated by a DCI format, the characteristic PDSCH receptions include: PDSCH receptions associated to DCI formats in the characteristic signaling group that indicate provision of HARQ-ACK information.

In one embodiment, the expression "the characteristic PDSCH receptions being related to the target information" comprises that when the target information indicates that whether HARQ-ACK information is to be provided is indicated by a DCI format: a PDSCH reception scheduled by a DCI format that indicates non-provision of HARQ-ACK information is not a said characteristic PDSCH reception.

In one embodiment, the expression "the characteristic PDSCH receptions being related to the target information" comprises that when the target information indicates that whether HARQ-ACK information is to be provided is indicated by a DCI format, a said characteristic PDSCH reception is a PDSCH reception associated to the characteristic signaling group other than a PDSCH reception scheduled by a DCI format that indicates non-provision of the HARQ-ACK information.

In one embodiment, the expression "the characteristic PDSCH receptions being related to the target information" comprises that when the target information indicates that whether HARQ-ACK information is to be provided is indicated by a DCI format, a said characteristic PDSCH reception is a PDSCH reception associated to a signaling other than a DCI format that indicates non-provision of HARQ-ACK information in the characteristic signaling group.

In one embodiment, the expression "the characteristic PDSCH receptions being related to the target information" comprises that when the target information indicates that whether HARQ-ACK information is to be provided is indicated by a DCI format, a said characteristic PDSCH reception is a PDSCH reception associated to a signaling other than a DCI format that indicates non-provision of HARQ-ACK information in the characteristic signaling group.

In one embodiment, the expression "the characteristic PDSCH receptions being related to the target information" comprises that when the target information indicates provision of HARQ-ACK information, the characteristic PDSCH receptions are PDSCH receptions scheduled by signalings in the characteristic signaling group.

In one embodiment, the expression "the characteristic PDSCH receptions being related to the target information" comprises that when the target information indicates provision of HARQ-ACK information, a PDSCH reception scheduled by any signaling in the characteristic signaling group is a said characteristic PDSCH reception.

In one embodiment, the expression "the characteristic PDSCH receptions being related to the target information" comprises that when the target information indicates provision of HARQ-ACK information, the characteristic PDSCH receptions are PDSCH receptions being associated to the characteristic signaling group.

In one embodiment, the expression "the characteristic PDSCH receptions being related to the target information" comprises that when the target information indicates provision of HARQ-ACK information, a said characteristic PDSCH reception is a PDSCH reception being associated to any signaling in the characteristic signaling group.

In one embodiment, the expression "the characteristic PDSCH receptions being related to the target information" comprises that when the target information indicates provision of HARQ-ACK information, the characteristic PDSCH receptions include: PDSCH receptions scheduled by signalings in the characteristic signaling group.

In one embodiment, when the target information indicates provision of HARQ-ACK information, any PDSCH reception being associated to the characteristic signaling group is a said characteristic PDSCH reception.

In one embodiment, when the target information indicates that whether HARQ-ACK information is to be provided is indicated by a DCI format, a said characteristic PDSCH reception is a PDSCH reception associated to the characteristic signaling group other than a PDSCH reception scheduled by a DCI format that indicates non-provision of the HARQ-ACK information.

In one embodiment, when the target information indicates that whether HARQ-ACK information is to be provided is indicated by a DCI format, a said characteristic PDSCH reception is a PDSCH reception scheduled by a signaling in the characteristic signaling group other than a DCI format that indicates non-provision of the HARQ-ACK information.

In one embodiment, when the target information indicates that whether HARQ-ACK information is to be provided is indicated by a DCI format, a said characteristic PDSCH reception is a PDSCH reception scheduled by a signaling in the characteristic signaling group other than a PDSCH reception scheduled by a DCI format that indicates non-provision of the HARQ-ACK information.

In one embodiment, when the target information indicates that whether HARQ-ACK information is to be provided is indicated by a DCI format, a said characteristic PDSCH reception is a PDSCH reception scheduled by a DCI format in the characteristic signaling group that indicates provision of the HARQ-ACK information.

In one embodiment, when the target information indicates that whether HARQ-ACK information is to be provided is indicated by a DCI format, a said characteristic PDSCH reception is a PDSCH reception associated to a DCI format in the characteristic signaling group that indicates provision of the HARQ-ACK information.

In one embodiment, when the target information indicates that whether HARQ-ACK information is to be provided is indicated by a DCI format, a said characteristic PDSCH reception includes: a PDSCH reception associated to the characteristic signaling group other than a PDSCH reception scheduled by a DCI format that indicates non-provision of the HARQ-ACK information.

In one embodiment, when the target information indicates that whether HARQ-ACK information is to be provided is indicated by a DCI format, a said characteristic PDSCH reception includes: a PDSCH reception scheduled by a signaling in the characteristic signaling group other than a DCI format that indicates non-provision of the HARQ-ACK information.

In one embodiment, when the target information indicates that whether HARQ-ACK information is to be provided is indicated by a DCI format, a said characteristic PDSCH reception includes: a PDSCH reception scheduled by a signaling in the characteristic signaling group other than a PDSCH reception scheduled by a DCI format that indicates non-provision of the HARQ-ACK information.

In one embodiment, when the target information indicates that whether HARQ-ACK information is to be provided is indicated by a DCI format, a said characteristic PDSCH reception includes: a PDSCH reception scheduled by a DCI format in the characteristic signaling group that indicates provision of the HARQ-ACK information.

In one embodiment, when the target information indicates that whether HARQ-ACK information is to be provided is indicated by a DCI format, a said characteristic PDSCH reception includes: a PDSCH reception associated to a DCI format in the characteristic signaling group that indicates provision of the HARQ-ACK information.

In one embodiment, when the target information indicates that whether HARQ-ACK information is to be provided is indicated by a DCI format: a PDSCH reception scheduled by a DCI format that indicates non-provision of HARQ-ACK information is not a said characteristic PDSCH reception.

In one embodiment, when the target information indicates that whether HARQ-ACK information is to be provided is indicated by a DCI format, a said characteristic PDSCH reception is a PDSCH reception associated to the characteristic signaling group other than a PDSCH reception scheduled by a DCI format that indicates non-provision of the HARQ-ACK information.

In one embodiment, when the target information indicates that whether HARQ-ACK information is to be provided is indicated by a DCI format, a said characteristic PDSCH reception is a PDSCH reception associated to a signaling in the characteristic signaling group other than a DCI format that indicates non-provision of the HARQ-ACK information.

In one embodiment, when the target information indicates that whether HARQ-ACK information is to be provided is indicated by a DCI format, a said characteristic PDSCH reception is a PDSCH reception associated to a signaling in the characteristic signaling group other than a DCI format that indicates non-provision of the HARQ-ACK information.

In one embodiment, when the target information indicates provision of HARQ-ACK information, a said characteristic PDSCH reception is a PDSCH reception being scheduled by a signaling in the characteristic signaling group.

In one embodiment, when the target information indicates provision of HARQ-ACK information, a PDSCH reception scheduled by any signaling in the characteristic signaling group is a said characteristic PDSCH reception.

In one embodiment, when the target information indicates provision of HARQ-ACK information, a characteristic PDSCH reception is a PDSCH reception being associated to the characteristic signaling group.

In one embodiment, when the target information indicates provision of HARQ-ACK information, a characteristic PDSCH reception is a PDSCH reception being associated to any signaling in the characteristic signaling group.

In one embodiment, when the target information indicates provision of HARQ-ACK information, a said characteristic PDSCH reception includes a PDSCH reception being scheduled by a signaling in the characteristic signaling group.

In one embodiment, when the target information indicates provision of HARQ-ACK information, any PDSCH reception being associated to the characteristic signaling group is a said characteristic PDSCH reception.

In one embodiment, when the target information indicates provision of HARQ-ACK information, a PDSCH reception scheduled by a signaling in any characteristic signaling group mentioned above is a said characteristic PDSCH reception.

In one embodiment, when the target information indicates provision of HARQ-ACK information, a characteristic PDSCH reception is a PDSCH reception being associated to a signaling in any characteristic signaling group mentioned above.

In one embodiment, the statement that "the target information indicates that whether HARQ-ACK information is to be provided is indicated by a DCI format" comprises that the value of the target information is set to dci-enabler.

In one embodiment, the statement that "the target information indicates provision of HARQ-ACK information" comprises that the value of the target information is set to enabled.

In one embodiment, the first reference order comprises: an ascending order of serving cell index comes first, and an ascending order of time interval index comes second.

In one embodiment, the first reference order comprises: an ascending order of time interval index comes first, and an ascending order of serving cell index comes second.

In one embodiment, the first reference order comprises: an increasing order of start time for PDSCH reception for a same {serving cell, time interval }-pair comes first, and an ascending order of serving cell index comes second, and an ascending order of time interval index comes third.

In one embodiment, a {serving cell i1, time interval j1}-pair and a {serving cell i2, time interval j2}-pair are both characteristic {serving cell, time interval }-pairs, the i1 and the i2 are both serving cell indexes, and the j1 and the j2 are both time interval indexes, and the i1, the i2, the j1 and the j2 are all non-negative integers; in accordance with the first reference order: if the j 1 is less than the j2, the {serving cell i1, time interval j1}-pair precedes the {serving cell i2, time interval j2 }-pair; if the j 1 is equal to the j2 and the i1 is less than the i2, the {serving cell i1, time interval j1}-pair precedes the {serving cell i2, time interval j2 }-pair in the first reference order.

In one subembodiment, in accordance with the first reference order: if the j1 is equal to the j2 and the i1 is equal to the i2, one of the {serving cell i1, time interval j1}-pair and the {serving cell i2, time interval j2}-pair corresponding to an earlier start time for PDSCH reception precedes the other.

In one embodiment, for one signaling in the first signaling group, the accumulative number of the characteristic {serving cell, time interval }-pairs, according to the first reference order, up to the current serving cell and the current time interval is: adding 1 to a total number of the characteristic {serving cell, time interval}-pairs before {the current serving cell, the current time interval }-pair according to the first reference order.

In one embodiment, {the current serving cell, the current time interval}-pair corresponding to a signaling in the first signaling group is one characteristic {serving cell, time interval}-pair mentioned above.

In one embodiment, in the first reference order: an ascending order of serving cell index comes first, and an ascending order of time interval index comes second.

In one embodiment, in the first reference order: an increasing order of start time for PDSCH reception for a same {serving cell, time interval }-pair comes first, and an ascending order of serving cell index comes second, and an ascending order of time interval index comes third.

In one embodiment, the time interval is a PDCCH monitoring occasion, and the time interval index is a PDCCH monitoring occasion index.

In one embodiment, the meaning of the statement "the target information indicates that whether HARQ-ACK information is to be provided is indicated by a DCI format" in the present application comprises: the target information indicating that whether HARQ-ACK information is to be provided is indicated by a DCI.

In one embodiment, the meaning of the statement "the target information indicates that whether HARQ-ACK information is to be provided is indicated by a DCI format" in the present application comprises: the target information indicating that it is a DCI that indicates whether HARQ-ACK information is to be provided.

In one embodiment, the meaning of the statement "the target information indicates that whether HARQ-ACK information is to be provided is indicated by a DCI format" in the present application comprises: the value of the target information denoting that it is a DCI that indicates whether HARQ-ACK information is to be provided.

In one embodiment, the statement in the present application that "the target information indicates provision of HARQ-ACK information" comprises that the value of the target information denotes the provision of HARQ-ACK information.

### Embodiment 13

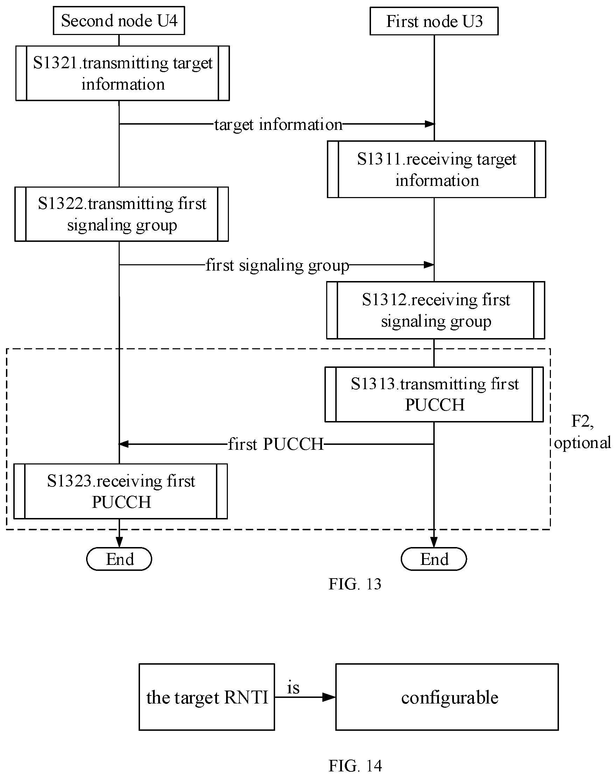

Embodiment 13 illustrates a flowchart of signal transmission according to one embodiment of the present application, as shown in FIG. 13. In FIG. 13, a first node U3 and a second node U4 are in communication via an air interface. Specially, steps marked by the dashed-line box F2 are optional.

The first node U3 receives target information in step S1311; receives a first signaling group in step S1312; and transmits a first PUCCH in step S1313.

The second node U4 transmits target information in step S1321; transmits a first signaling group in step S1322; and receives a first PUCCH in step S1323.

In Embodiment 13, the target information is for a target RNTI and used to indicate whether HARQ-ACK information is to be provided, the target RNTI being configurable; for any signaling in the first signaling group, a value of a target field being included denotes an accumulative number of characteristic {serving cell, time interval}-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes; the first RNTI is a G-RNTI; when the target information indicates that whether HARQ-ACK information is to be provided is indicated by a DCI format, a said characteristic PDSCH reception is a PDSCH reception associated to the characteristic signaling group other than a PDSCH reception scheduled by a DCI format that indicates non-provision of the HARQ-ACK information; the time interval is a PDCCH monitoring occasion; the first reference order comprises: firstly, in an ascending order of serving cell index and then in an ascending order of PDCCH monitoring occasion index; or the first reference order comprises: firstly, in an increasing order of start time for PDSCH reception for a same {serving cell, time interval }-pair, and then, in an ascending order of serving cell index, and thirdly, in an ascending order of PDCCH monitoring occasion index.

In one subembodiment of Embodiment 13, when the target information indicates provision of HARQ-ACK information, a said characteristic PDSCH reception is a PDSCH reception being associated to the characteristic signaling group.

In one subembodiment of Embodiment 13, the first PUCCH carries a first HARQ-ACK bit block; the first HARQ-ACK bit block comprises HARQ-ACK bits for transport blocks (TBs) in a PDSCH scheduled by at least one signaling in the first signaling group; the first HARQ-ACK bit block depends on the value of the target field in at least one signaling in the first signaling group.

In one embodiment, the first node U3 is the first node in the present application.

In one embodiment, the second node U4 is the second node in the present application.

In one embodiment, the first node U3 is a UE.

In one embodiment, the first node U3 is a base station.

In one embodiment, the second node U4 is a base station.

In one embodiment, the second node U4 is a UE.

In one embodiment, an air interface between the second node U4 and the first node U3 is a Uu interface.

In one embodiment, an air interface between the second node U4 and the first node U3 includes a cellular link.

In one embodiment, an air interface between the second node U4 and the first node U3 is a PCS interface.

In one embodiment, an air interface between the second node U4 and the first node U3 includes a sidelink.

In one embodiment, an air interface between the second node U4 and the first node U3 includes a radio interface between a base station and a UE.

In one embodiment, an air interface between the second node U4 and the first node U3 includes a radio interface between a satellite device and a UE.

In one embodiment, an air interface between the second node U4 and the first node U3 includes a radio interface between a UE and another UE.

In one embodiment, a problem to be solved in the present application includes: how to improve the efficiency of HARQ-ACK feedback.

In one embodiment, a problem to be solved in the present application includes: how to improve the efficiency of utilization of PUCCH resources or the transmission performance of PUCCH.

In one embodiment, a problem to be solved in the present application includes: how to define what is represented by the value of the target field included by a signaling in the first signaling group.

In one embodiment, a problem to be solved in the present application includes: how to define a said characteristic {serving cell, time interval }-pair.

In one embodiment, a problem to be solved in the present application includes: how to determine a said characteristic PDSCH reception.

In one embodiment, a problem to be solved in the present application includes: how to define the content of the indication of the DAI field based on the configuration of the HARQ-ACK feedback.

In one embodiment, a problem to be solved in the present application includes: how to define the content of the indication of the counter DAI field based on the configuration of the HARQ-ACK feedback.

In one embodiment, a problem to be solved in the present application includes: how to optimize uplink transmission of control signaling.

In one embodiment, steps marked by the dashed-line box F2 exist.

In one embodiment, steps marked by the dashed-line box F2 do not exist.

In one embodiment, a PDSCH reception in this application is for the first node.

### Embodiment 14

Embodiment 14 illustrates a schematic diagram explaining a target RNTI according to one embodiment of the present application, as shown in FIG. 14.

In Embodiment 14, the target RNTI is configurable.

In one embodiment, the statement that the target RNTI is configurable comprises: the first node being provided with at least the target RNTI.

In one embodiment, the target RNTI is configured by an RRC signaling.

In one embodiment, the target RNTI is configured in an information element (IE) MAC-CellGroupConfig.

In one embodiment, the target RNTI is a G-RNTI.

In one embodiment, the target RNTI is a G-CS-RNTI.

In one embodiment, the target RNTI is a G-RNTI or a G-CS-RNTI.

In one embodiment, the target RNTI is an RNTI for multicasting.

In one embodiment, the target RNTI is a Radio Network Temporary Identifier (RNTI) for Point to Multipoint (PTM) scheduling and transmission.

In one embodiment, the target RNTI is an RNTI that is used to scramble a CRC of a multicast DCI format.

In one embodiment, the target RNTI is an RNTI that is used to scramble a CRC of a broadcast DCI format.

### Embodiment 15

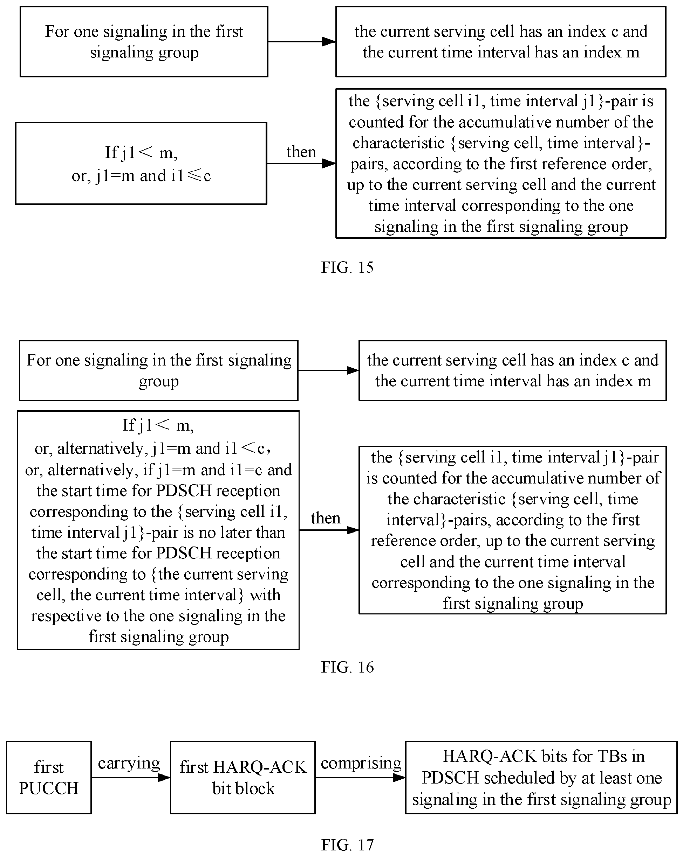

Embodiment 15 illustrates a schematic diagram illustrating an accumulative number of characteristic {serving cell, time interval}-pairs up to a current serving cell and a current time interval according to a first reference order for one signaling in a first signaling group, according to one embodiment of the present application, as shown in FIG. 15.

In Embodiment 15, for one signaling in the first signaling group, the current serving cell has an index c and the current time interval has an index m, the c and the m being non-negative integers; a {serving cell i1, time interval j1}-pair is a characteristic {serving cell, time interval}-pair, the i1 being a serving cell index and the j1 being a time interval index, the i1 and the j1 are non-negative integers; if the j1 is less than the m, or, alternatively, the j1 is equal to the m and the i1 is not greater than the c: then the {serving cell i1, time interval j1}-pair is counted for the accumulative number of the characteristic {serving cell, time interval }-pairs, according to the first reference order, up to the current serving cell and the current time interval corresponding to the one signaling in the first signaling group.

In one embodiment, for one signaling in the first signaling group, the current serving cell has an index c and the current time interval has an index m, the c and the m being non-negative integers; a {serving cell i1, time interval j1}-pair is a characteristic {serving cell, time interval}-pair, the i1 being a serving cell index and the j1 being a time interval index, the i1 and the j1 are non-negative integers; if the j1 is greater than the m, or, alternatively, the j1 is equal to the m and the i1 is greater than the c: then the {serving cell i1, time interval j1}-pair is not counted for the accumulative number of the characteristic {serving cell, time interval }-pairs, according to the first reference order, up to the current serving cell and the current time interval corresponding to the one signaling in the first signaling group.

In one embodiment, the m is any non-negative integer less than M, and the M is equal to the cardinality of one set of PDCCH monitoring occasions.

In one embodiment, the set of PDCCH monitoring occasions is configurable.

In one embodiment, the set of PDCCH monitoring occasions is determined by the first node.

In one embodiment, the set of PDCCH monitoring occasions is specific to the target RNTI.

In one embodiment, the set of PDCCH monitoring occasions is defined as a union of PDCCH monitoring occasions configured on an active downlink BWP (i.e., Bandwidth part) of at least one serving cell.

In one embodiment, the c is any non-negative integer less than N1 and the N1 is configurable.

In one embodiment, N1 is configured by a higher layer signaling.

In one embodiment, N1 is configured by an RRC signaling.

In one embodiment, the N1 is not greater than a number of serving cells configured to the first node.

In one embodiment, the N1 is equal to a number of serving cells configured for receiving PDSCHs for the target RNTI.

In one embodiment, the N1 is equal to a number of serving cells configured for receiving multicast PDSCHs for the target RNTI.

In one embodiment, for one signaling in the first signaling group, {the current serving cell that corresponds to the signaling, the current time interval that corresponds to the signaling} is counted for the accumulative number of the characteristic {serving cell, time interval }-pairs, according to the first reference order, up to the current serving cell and the current time interval corresponding to the one signaling in the first signaling group.

### Embodiment 16

Embodiment 16 illustrates a schematic diagram illustrating an accumulative number of characteristic {serving cell, time interval}-pairs up to a current serving cell and a current time interval according to a first reference order for one signaling in a first signaling group, according to one embodiment of the present application, as shown in FIG. 16.

In Embodiment 16, for one signaling in the first signaling group, the current serving cell has an index c and the current time interval has an index m, the c and the m being non-negative integers; a {serving cell i1, time interval j1}-pair is a characteristic {serving cell, time interval}-pair, the i1 being a serving cell index and the j1 being a time interval index, the i1 and the j1 are non-negative integers; if the j1 is less than the m, or, alternatively, the j1 is equal to the m and the i1 is less than the c, or, alternatively, if the j1 is equal to the m and the i1 is equal to the c and the start time for PDSCH reception corresponding to the {serving cell i1, time interval j1}-pair is no later than the start time for PDSCH reception corresponding to {the current serving cell, the current time interval} with respective to the one signaling in the first signaling group: then the {serving cell i1, time interval j1}-pair is counted for the accumulative number of the characteristic {serving cell, time interval }-pairs, according to the first reference order, up to the current serving cell and the current time interval corresponding to the one signaling in the first signaling group.

In one embodiment, for one signaling in the first signaling group, the current serving cell has an index c and the current time interval has an index m, the c and the m being non-negative integers; a {serving cell i1, time interval j1}-pair is a characteristic {serving cell, time interval}-pair, the i1 being a serving cell index and the j1 being a time interval index, the i1 and the j1 are non-negative integers; if the j1 is greater than the m, or, alternatively, the j1 is equal to the m and the i1 is greater than the c, or, alternatively, if the j1 is equal to the m and the i1 is equal to the c and the start time for PDSCH reception corresponding to the {serving cell i1, time interval j1}-pair is later than the start time for PDSCH reception corresponding to {the current serving cell, the current time interval} with respective to the one signaling in the first signaling group: then the {serving cell i1, time interval j1}-pair is not counted for the accumulative number of the characteristic {serving cell, time interval }-pairs, according to the first reference order, up to the current serving cell and the current time interval corresponding to the one signaling in the first signaling group.

In one embodiment, the m is any non-negative integer less than M, and the M is equal to the cardinality of one set of PDCCH monitoring occasions.

In one embodiment, the set of PDCCH monitoring occasions is configurable.

In one embodiment, the set of PDCCH monitoring occasions is determined by the first node.

In one embodiment, the set of PDCCH monitoring occasions is specific to the target RNTI.

In one embodiment, the set of PDCCH monitoring occasions is defined as a union of PDCCH monitoring occasions configured on an active downlink BWP (i.e., Bandwidth part) of at least one serving cell.

In one embodiment, the c is any non-negative integer less than N1 and the N1 is configurable.

In one embodiment, N1 is configured by a higher layer signaling.

In one embodiment, N1 is configured by an RRC signaling.

In one embodiment, the N1 is not greater than a number of serving cells configured to the first node.

In one embodiment, the N1 is equal to a number of serving cells configured for receiving PDSCHs for the target RNTI.

In one embodiment, the N1 is equal to a number of serving cells configured for receiving multicast PDSCHs for the target RNTI.

### Embodiment 17

Embodiment 17 illustrates a schematic diagram of relations among a first PUCCH, a first HARQ-ACK bit block and a first signaling group according to one embodiment of the present application, as shown in FIG. 17.

In Embodiment 17, the first PUCCH carries a first HARQ-ACK bit block, the first HARQ-ACK bit block comprising HARQ-ACK bits for transport blocks (TBs) in a PDSCH scheduled by at least one signaling in the first signaling group.

In one embodiment, the expression "transmitting a first PUCCH, the first PUCCH carrying a first HARQ-ACK bit block" comprises: the first HARQ-ACK bit block being transmitted in the first PUCCH.

In one embodiment, the phrase the first PUCCH carrying a first HARQ-ACK bit block comprises: the first PUCCH (i.e., Physical uplink control channel) carrying HARQ-ACK information represented by the first HARQ-ACK bit block.

In one embodiment, the first HARQ-ACK bit block is transmitted in the first PUCCH after being through at least Channel coding.

In one embodiment, the first HARQ-ACK bit block is transmitted in the first PUCCH after being through at least Modulation as well as Mapping to physical resources.

In one embodiment, the first HARQ-ACK bit block is transmitted in the first PUCCH after being through at least Channel coding, Modulation as well as Mapping to physical resources.

In one embodiment, the first HARQ-ACK bit block comprises a dynamic HARQ-ACK codebook.

In one embodiment, the first HARQ-ACK bit block comprises a Type-2 HARQ-ACK codebook.

In one embodiment, the first HARQ-ACK bit block is included in a dynamic HARQ-ACK codebook.

In one embodiment, the first HARQ-ACK bit block is included in a Type-2 HARQ-ACK codebook.

In one embodiment, at least one HARQ-ACK bit in the first HARQ-ACK bit block denotes multicast HARQ-ACK (i.e., Hybrid automatic repeat request acknowledgement) information.

In one embodiment, at least one signaling in the first signaling group indicates a slot occupied for transmitting of the first PUCCH.

In one embodiment, at least one signaling in the first signaling group indicates a PUCCH resource occupied by the first PUCCH.

In one embodiment, at least one signaling in the first signaling group indicates the provision of HARQ-ACK information when the target information indicates that whether HARQ-ACK information is to be provided is indicated by a DCI format.

In one embodiment, at least one signaling in the characteristic signaling group indicates the provision of HARQ-ACK information when the target information indicates that whether HARQ-ACK information is to be provided is indicated by a DCI format.

In one embodiment, the statement "the target information indicates that whether HARQ-ACK information is to be provided is indicated by a DCI format" in the present application comprises: the target information being used to indicate that whether HARQ-ACK information is to be provided is indicated by a DCI.

### Embodiment 18

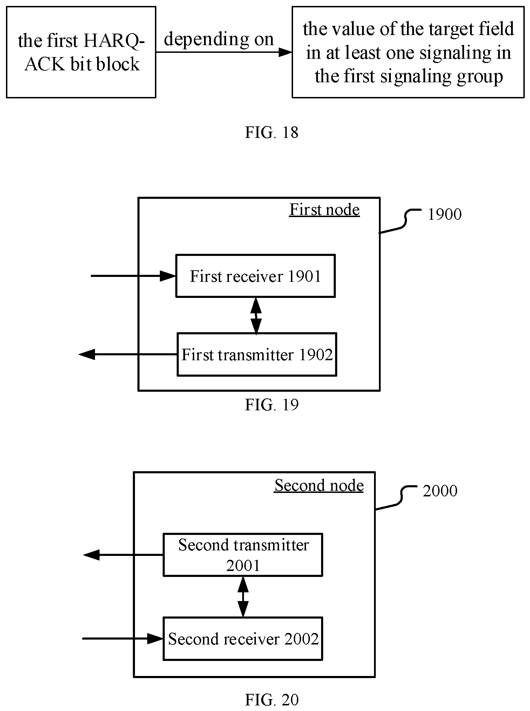

Embodiment 18 illustrates a schematic diagram of a relation between a first HARQ-ACK bit block and the value of the target field in at least one signaling in the first signaling group according to one embodiment of the present application, as shown in FIG. 18.

In Embodiment 18, the first HARQ-ACK bit block depends on the value of the target field in at least one signaling in the first signaling group.

In one embodiment, the value of the target field in at least one signaling in the first signaling group is used to determine the first HARQ-ACK bit block.

In one embodiment, the value of the target field in one signaling in the first signaling group is used to indicate index(es) of at least one HARQ-ACK bit in the first HARQ-ACK bit block.

In one embodiment, the value of the target field in at least one signaling in the first signaling group is used to indicate which bits in the first HARQ-ACK bit block are set to NACK.

In one embodiment, the value of the target field in at least one signaling in the first signaling group is used to indicate which bits in the first HARQ-ACK bit block have their values set to 0.

In one embodiment, a total number of HARQ-ACK bits included in the first HARQ-ACK bit block depends on the value of the target field in at least one signaling in the first signaling group.

In one embodiment, the value of the target field in at least one signaling in the first signaling group is used to indicate a total number of HARQ-ACK bits included in the first HARQ-ACK bit block

### Embodiment 19

Embodiment 19 illustrates a structure block diagram of a processing device in a first node, as shown in FIG. 19. In FIG. 19, a first node processing device 1900 comprises a first receiver 1901 and a first transmitter 1902.

In one embodiment, the first node 1900 is a base station.

In one embodiment, the first node 1900 is a UE.

In one embodiment, the first node 1900 is a relay node.

In one embodiment, the first node 1900 is vehicle-mounted communication equipment.

In one embodiment, the first node 1900 is a UE supporting V2X communications.

In one embodiment, the first node 1900 is a relay node supporting V2X communications.

In one embodiment, the first node 1900 is a UE supporting operations on high-frequency spectrum.

In one embodiment, the first node 1900 is a UE supporting operations on shared spectrum.

In one embodiment, the first node 1900 is a UE supporting XR services.

In one embodiment, the first node 1900 is a UE supporting multicast transmission.

In one embodiment, the first receiver 1901 comprises at least one of the antenna 452, the receiver 454, the multi-antenna receiving processor 458, the receiving processor 456, the controller/processor 459, the memory 460 or the data source 467 in FIG. 4 of the present application.

In one embodiment, the first receiver 1901 comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1901 comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1901 comprises at least the first three of the antenna 452, the receiver 454, the multi-antenna receiving processor 458, the receiving processor 456, the controller/processor 459, the memory 460 and the data source 467 in FIG. 4 of the present application.

In one embodiment, the first receiver 1901 comprises at least the first two of the antenna 452, the receiver 454, the multi-antenna receiving processor 458, the receiving processor 456, the controller/processor 459, the memory 460 and the data source 467 in FIG. 4 of the present application.

In one embodiment, the first transmitter 1902 comprises at least one of the antenna 452, the transmitter 454, the multi-antenna transmitting processor 457, the transmitting processor 468, the controller/processor 459, the memory 460 or the data source 467 in FIG. 4 of the present application.

In one embodiment, the first transmitter 1902 comprises at least the first five of the antenna 452, the transmitter 454, the multi-antenna transmitting processor 457, the transmitting processor 468, the controller/processor 459 the memory 460 and the data source 467 in FIG. 4 of the present application.

In one embodiment, the first transmitter 1902 comprises at least the first four of the antenna 452, the transmitter 454, the multi-antenna transmitting processor 457, the transmitting processor 468, the controller/processor 459 the memory 460 and the data source 467 in FIG. 4 of the present application.

In one embodiment, the first transmitter 1902 comprises at least the first three of the antenna 452, the transmitter 454, the multi-antenna transmitting processor 457, the transmitting processor 468, the controller/processor 459 the memory 460 and the data source 467 in FIG. 4 of the present application.

In one embodiment, the first transmitter 1902 comprises at least the first two of the antenna 452, the transmitter 454, the multi-antenna transmitting processor 457, the transmitting processor 468, the controller/processor 459 the memory 460 and the data source 467 in FIG. 4 of the present application.

In one embodiment, the first receiver 1901 receives target information, the target information being for a target RNTI and used to indicate whether HARQ-ACK information is to be provided, the target RNTI being configurable; and receives a first signaling group; herein, for any signaling in the first signaling group, a value of a target field being included denotes an accumulative number of characteristic {serving cell, time interval}-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

In one embodiment, the target RNTI is a G-RNTI.

In one embodiment, when the target information indicates that whether HARQ-ACK information is to be provided is indicated by a DCI format, a characteristic PDSCH reception is a PDSCH reception associated to the characteristic signaling group other than a PDSCH reception scheduled by a DCI format that indicates non-provision of the HARQ-ACK information.

In one embodiment, when the target information indicates provision of HARQ-ACK information, a characteristic PDSCH reception is a PDSCH reception being associated to the characteristic signaling group.

In one embodiment, the time interval is a PDCCH monitoring occasion; the first reference order comprises: firstly in an ascending order of serving cell index and then in an ascending order of PDCCH monitoring occasion index.

In one embodiment, the time interval is a PDCCH monitoring occasion; the first reference order comprises: firstly, in an increasing order of start time for PDSCH reception for a same {serving cell, time interval }-pair, and then, in an ascending order of serving cell index, and thirdly, in an ascending order of PDCCH monitoring occasion index.

In one embodiment, the first transmitter 1902 transmits a first PUCCH, the first PUCCH carrying a first HARQ-ACK bit block; herein, the first HARQ-ACK bit block comprises HARQ-ACK bits for transport blocks (TBs) in a PDSCH scheduled by at least one signaling in the first signaling group.

In one embodiment, the first HARQ-ACK bit block depends on the value of the target field in at least one signaling in the first signaling group.

In one embodiment, the target field is a counter DAI.

### Embodiment 20

Embodiment 20 illustrates a structure block diagram a processing device in a second node according to one embodiment of the present application, as shown in FIG. 20. In FIG. 20, a second node processing device 2000 comprises a second transmitter 2001 and a second receiver 2002.

In one embodiment, the second node 2000 is a UE.

In one embodiment, the second node 2000 is a base station.

In one embodiment, the second node 2000 is satellite equipment.

In one embodiment, the second node 2000 is a relay node.

In one embodiment, the second node 2000 is vehicle-mounted communication equipment.

In one embodiment, the second node 2000 is UE supporting V2X communications.

In one embodiment, the second node 2000 is a device supporting operations on high-frequency spectrum.

In one embodiment, the second node 2000 is a device supporting operations on shared spectrum.

In one embodiment, the second node 2000 is a device supporting XR services.

In one embodiment, the second node 2000 is one piece of test apparatus, test equipment or test instrument.

In one embodiment, the second transmitter 2001 comprises at least one of the antenna 420, the transmitter 418, the multi-antenna transmitting processor 471, the transmitting processor 416, the controller/processor 475 or the memory 476 in FIG. 4 of the present application.

In one embodiment, the second transmitter 2001 comprises at least the first five of the antenna 420, the transmitter 418, the multi-antenna transmitting processor 471, the transmitting processor 416, the controller/processor 475 and the memory 476 in FIG. 4 of the present application.

In one embodiment, the second transmitter 2001 comprises at least the first four of the antenna 420, the transmitter 418, the multi-antenna transmitting processor 471, the transmitting processor 416, the controller/processor 475 and the memory 476 in FIG. 4 of the present application.

In one embodiment, the second transmitter 2001 comprises at least the first three of the antenna 420, the transmitter 418, the multi-antenna transmitting processor 471, the transmitting processor 416, the controller/processor 475 and the memory 476 in FIG. 4 of the present application.

In one embodiment, the second transmitter 2001 comprises at least the first two of the antenna 420, the transmitter 418, the multi-antenna transmitting processor 471, the transmitting processor 416, the controller/processor 475 and the memory 476 in FIG. 4 of the present application.

In one embodiment, the second receiver 2002 comprises at least one of the antenna 420, the receiver 418, the multi-antenna receiving processor 472, the receiving processor 470, the controller/processor 475 or the memory 476 in FIG. 4 of the present application.

In one embodiment, the second receiver 2002 comprises at least the first five of the antenna 420, the receiver 418, the multi-antenna receiving processor 472, the receiving processor 470, the controller/processor 475 and the memory 476 in FIG. 4 of the present application.

In one embodiment, the second receiver 2002 comprises at least the first four of the antenna 420, the receiver 418, the multi-antenna receiving processor 472, the receiving processor 470, the controller/processor 475 and the memory 476 in FIG. 4 of the present application.

In one embodiment, the second receiver 2002 comprises at least the first three of the antenna 420, the receiver 418, the multi-antenna receiving processor 472, the receiving processor 470, the controller/processor 475 and the memory 476 in FIG. 4 of the present application.

In one embodiment, the second receiver 2002 comprises at least the first two of the antenna 420, the receiver 418, the multi-antenna receiving processor 472, the receiving processor 470, the controller/processor 475 and the memory 476 in FIG. 4 of the present application.

In one embodiment, the second transmitter 2001 transmits target information, the target information being for a target RNTI and used to indicate whether HARQ-ACK information is to be provided, the target RNTI being configurable; and transmits a first signaling group; herein, for any signaling in the first signaling group, a value of a target field being included denotes an accumulative number of characteristic {serving cell, time interval }-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

In one embodiment, the target RNTI is a G-RNTI.

In one embodiment, when the target information indicates that whether HARQ-ACK information is to be provided is indicated by a DCI format, a characteristic PDSCH reception is a PDSCH reception associated to the characteristic signaling group other than a PDSCH reception scheduled by a DCI format that indicates non-provision of the HARQ-ACK information.

In one embodiment, when the target information indicates provision of HARQ-ACK information, a characteristic PDSCH reception is a PDSCH reception being associated to the characteristic signaling group.

In one embodiment, the time interval is a PDCCH monitoring occasion; the first reference order comprises: firstly in an ascending order of serving cell index and then in an ascending order of PDCCH monitoring occasion index.

In one embodiment, the time interval is a PDCCH monitoring occasion; the first reference order comprises: firstly, in an increasing order of start time for PDSCH reception for a same {serving cell, time interval }-pair, and then, in an ascending order of serving cell index, and thirdly, in an ascending order of PDCCH monitoring occasion index.

In one embodiment, the second receiver 2002 receives a first PUCCH, the first PUCCH carrying a first HARQ-ACK bit block; herein, the first HARQ-ACK bit block comprises HARQ-ACK bits for transport blocks (TBs) in a PDSCH scheduled by at least one signaling in the first signaling group.

In one embodiment, the first HARQ-ACK bit block depends on the value of the target field in at least one signaling in the first signaling group.

In one embodiment, the target field is a counter DAI.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, airplanes, unmanned aerial vehicles, telecontrolled aircrafts, etc. The base station in the present application includes but is not limited to macro-cellular base stations, micro-cellular base stations, home base stations, relay base station, eNB, gNB, Transmitter Receiver Point (TRP), GNSS, relay satellite, satellite base station, airborne base station, test apparatus, test equipment or test instrument, and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, comprising:
a first receiver, receiving target information, the target information being for a target RNTI and used to indicate whether HARQ-ACK information is to be provided, the target RNTI being configurable; and receiving a first signaling group;
wherein for any signaling in the first signaling group, a value of a target field being included denotes an accumulative number of characteristic {serving cell, time interval }-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

2. The first node according to claim 1, **characterized in that** the target RNTI is a G-RNTI.

3. The first node according to claim 1 or 2, **characterized in that** when the target information indicates that whether HARQ-ACK information is to be provided is indicated by a DCI format, the characteristic PDSCH receptions are PDSCH receptions associated to the characteristic signaling group other than a PDSCH reception scheduled by a DCI format that indicates non-provision of the HARQ-ACK information.

4. The first node according to any of claims 1-3, **characterized in that** when the target information indicates provision of HARQ-ACK information, the characteristic PDSCH receptions are PDSCH receptions being associated to the characteristic signaling group.

5. The first node according to any of claims 1-4, **characterized in that** a characteristic PDSCH reception is present in each of the characteristic {serving cell, time interval }-pairs.

6. The first node according to any of claims 1-5, **characterized in that** the time interval is a PDCCH monitoring occasion.

7. The first node according to any of claims 1-6, **characterized in** comprising:
a first transmitter, transmitting a first PUCCH, the first PUCCH carrying a first HARQ-ACK bit block;
wherein the first HARQ-ACK bit block comprises HARQ-ACK bits for transport blocks (TBs) in a PDSCH scheduled by at least one signaling in the first signaling group.

8. The first node according to claim 7, **characterized in that** the first HARQ-ACK bit block depends on the value of the target field in at least one signaling in the first signaling group.

9. The first node according to any of claims 1-8, **characterized in that** a signaling in the first signaling group is a multicast DCI format.

10. The first node according to any of claims 1-9, **characterized in that** the first reference order comprises: firstly, in an increasing order of start time for PDSCH reception for a same {serving cell, time interval }-pair, and then, in an ascending order of serving cell index, and thirdly, in an ascending order of PDCCH monitoring occasion index.

11. A second node for wireless communications, comprising:
a second transmitter, transmitting target information, the target information being for a target RNTI and used to indicate whether HARQ-ACK information is to be provided, the target RNTI being configurable; and transmitting a first signaling group;
wherein for any signaling in the first signaling group, a value of a target field being included denotes an accumulative number of characteristic {serving cell, time interval }-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

12. The second node according to claim 11, **characterized in that** the target RNTI is a G-RNTI.

13. The second node according to claim 11 or 12, **characterized in that** when the target information indicates that whether HARQ-ACK information is to be provided is indicated by a DCI format, the characteristic PDSCH receptions are PDSCH receptions associated to the characteristic signaling group other than a PDSCH reception scheduled by a DCI format that indicates non-provision of the HARQ-ACK information.

14. The second node according to any of claims 11-13, **characterized in that** when the target information indicates provision of HARQ-ACK information, the characteristic PDSCH receptions are PDSCH receptions being associated to the characteristic signaling group.

15. The second node according to any of claims 11-14, **characterized in that** a characteristic PDSCH reception is present in each of the characteristic {serving cell, time interval }-pairs.

16. The second node according to any of claims 11-15, **characterized in that** the time interval is a PDCCH monitoring occasion.

17. The second node according to any of claims 11-16, **characterized in** comprising:
a second receiver, receiving a first PUCCH, the first PUCCH carrying a first HARQ-ACK bit block;
wherein the first HARQ-ACK bit block comprises HARQ-ACK bits for transport blocks (TBs) in a PDSCH scheduled by at least one signaling in the first signaling group.

18. The second node according to claim 17, **characterized in that** the first HARQ-ACK bit block depends on the value of the target field in at least one signaling in the first signaling group.

19. The second node according to any of claims 11-18, **characterized in that** a signaling in the first signaling group is a multicast DCI format.

20. The second node according to any of claims 11-19, **characterized in that** the first reference order comprises: firstly, in an increasing order of start time for PDSCH reception for a same {serving cell, time interval }-pair, and then, in an ascending order of serving cell index, and thirdly, in an ascending order of PDCCH monitoring occasion index.

21. A method in a first node for wireless communications, comprising:
receiving target information, the target information being for a target RNTI and used to indicate whether HARQ-ACK information is to be provided, the target RNTI being configurable; and receiving a first signaling group;
wherein for any signaling in the first signaling group, a value of a target field being included denotes an accumulative number of characteristic {serving cell, time interval }-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

22. The method in the first node according to claim 21, **characterized in that** the target RNTI is a G-RNTI.

23. The method in the first node according to claim 21 or 22, **characterized in that** when the target information indicates that whether HARQ-ACK information is to be provided is indicated by a DCI format, the characteristic PDSCH receptions are PDSCH receptions associated to the characteristic signaling group other than a PDSCH reception scheduled by a DCI format that indicates non-provision of the HARQ-ACK information.

24. The method in the first node according to any of claims 21-23, **characterized in that** when the target information indicates provision of HARQ-ACK information, the characteristic PDSCH receptions are PDSCH receptions being associated to the characteristic signaling group.

25. The method in the first node according to any of claims 21-24, **characterized in that** a characteristic PDSCH reception is present in each of the characteristic {serving cell, time interval }-pairs.

26. The method in the first node according to any of claims 21-25, **characterized in that** the time interval is a PDCCH monitoring occasion.

27. The method in the first node according to any of claims 21-26, **characterized in** comprising:
transmitting a first PUCCH, the first PUCCH carrying a first HARQ-ACK bit block;
wherein the first HARQ-ACK bit block comprises HARQ-ACK bits for transport blocks (TBs) in a PDSCH scheduled by at least one signaling in the first signaling group.

28. The method in the first node according to claim 27, **characterized in that** the first HARQ-ACK bit block depends on the value of the target field in at least one signaling in the first signaling group.

29. The method in the first node according to any of claims 21-28, **characterized in that** a signaling in the first signaling group is a multicast DCI format.

30. The method in the first node according to any of claims 21-29, **characterized in that** the first reference order comprises: firstly, in an increasing order of start time for PDSCH reception for a same {serving cell, time interval }-pair, and then, in an ascending order of serving cell index, and thirdly, in an ascending order of PDCCH monitoring occasion index.

31. A method in a second node for wireless communications, comprising:
transmitting target information, the target information being for a target RNTI and used to indicate whether HARQ-ACK information is to be provided, the target RNTI being configurable; and transmitting a first signaling group;
wherein for any signaling in the first signaling group, a value of a target field being included denotes an accumulative number of characteristic {serving cell, time interval }-pairs up to a current serving cell and a current time interval according to a first reference order; in the characteristic {serving cell, time interval }-pairs, characteristic PDSCH receptions or characteristic HARQ-ACK information are present, and the characteristic PDSCH receptions or the characteristic HARQ-ACK information are associated to a characteristic signaling group, the characteristic signaling group applying the target RNTI, the characteristic PDSCH receptions being related to the target information; the first reference order is based on at least serving cell indexes and time interval indexes.

32. The method in the second node according to claim 31, **characterized in that** the target RNTI is a G-RNTI.

33. The method in the second node according to claim 31 or 32, **characterized in that** when the target information indicates that whether HARQ-ACK information is to be provided is indicated by a DCI format, the characteristic PDSCH receptions are PDSCH receptions associated to the characteristic signaling group other than a PDSCH reception scheduled by a DCI format that indicates non-provision of the HARQ-ACK information.

34. The method in the second node according to any of claims 31-33, **characterized in that** when the target information indicates provision of HARQ-ACK information, the characteristic PDSCH receptions are PDSCH receptions being associated to the characteristic signaling group.

35. The method in the second node according to any of claims 31-34, **characterized in that** a characteristic PDSCH reception is present in each of the characteristic {serving cell, time interval}-pairs.

36. The method in the second node according to any of claims 31-35, **characterized in that** the time interval is a PDCCH monitoring occasion.

37. The method in the second node according to any of claims 31-36, **characterized in** comprising:
receiving a first PUCCH, the first PUCCH carrying a first HARQ-ACK bit block;
wherein the first HARQ-ACK bit block comprises HARQ-ACK bits for transport blocks (TBs) in a PDSCH scheduled by at least one signaling in the first signaling group.

38. The method in the second node according to claim 37, **characterized in that** the first HARQ-ACK bit block depends on the value of the target field in at least one signaling in the first signaling group.

39. The method in the second node according to any of claims 31-38, **characterized in that** a signaling in the first signaling group is a multicast DCI format.

40. The method in the second node according to any of claims 31-39, **characterized in that** the first reference order comprises: firstly, in an increasing order of start time for PDSCH reception for a same {serving cell, time interval }-pair, and then, in an ascending order of serving cell index, and thirdly, in an ascending order of PDCCH monitoring occasion index.
